# EUROPEAN PATENT APPLICATION

(11) **EP 3 892 692 A1**
(43) Date of publication of application: **13.10.2021**
(21) Application number: 20169055.9
(22) Date of filing: 09.04.2020
(51) Int. Cl.: C09D 5/08, C09D 7/40, C09D 163/00, C08K 3/08, C08K 3/40

(54) **COMPOSITION**

(71) Applicant: Jotun A/S, 3202 Sandefjord (NO)
(72) Inventor: BEKKEVARD, Pål U, N-3202 Sandefjord (NO); HANSEN, Sebastian H, N-3202 Sandefjord (NO)
(74) Representative: Gordon, Kirsteen Helen

(57) **Abstract**

The present invention provides a corrosion resistant coating composition comprising:
(i) a binder;
(ii) glass flakes;
(iii) zinc flakes; and
(iv) optionally zinc dust.

## Description

### INTRODUCTION

The present invention relates to a coating composition comprising a binder, glass flakes, zinc flakes and optionally zinc dust, which provides corrosion resistance. The invention also relates to a method and a kit for preparing the coating composition, to a container containing the composition and to a method of providing a coating on a surface using the coating composition. The invention also relates to a coating on a surface per se and to use of a composition to form a coating, and in particular, an anti-corrosion coating.

### BACKGROUND

Coatings comprising zinc dust have anti-corrosion properties. Such coatings are used extensively in, e.g. the marine and oil and gas industries, where coatings are constantly exposed to salt water. Anti-corrosive coatings are commonly used on *inter alia* bridges, fencing, refinery equipment, pipes, power plants, storage tanks, containers, windmills, turbines, and steel structures forming parts of buildings (e.g. airports, museums, sports arenas).

In zinc dust-containing coatings, the zinc dust functions as a conductive pigment to provide anodic protection, i.e. zinc dust acts as a sacrificial anode and prevents the metal substrate that it protects from anodising. The anodic protection provided by zinc dust in zinc-containing coatings relies on the flow of current in the coating, and therefore on the presence of sufficient zinc to support current flow. Conventionally zinc dust in anti-corrosive coatings is packed closely together and is present in a high weight percent to ensure this is achieved.

However, the presence of relatively high amounts of zinc dust in coating compositions (e.g. 50-80 wt% is typical) can be problematic. The presence of relatively high amounts of zinc in the coating composition increases its density and can cause settling during storage. It also makes the coating composition heavy, which has the practical problem of increasing transportation costs. Zinc from coatings can also leach into the environment which is harmful.

Attempts have been made to reduce the zinc content of anti-corrosion coatings. Thus whilst premium anti-corrosion coating compositions comprise around 80 wt% zinc dust, some products have appeared on the market containing around 50 wt% zinc dust. The coating compositions with lower amounts of zinc dust, however, do not provide the same levels of corrosion resistance.

WO2014/032844 discloses a corrosion resistant coating composition which comprises a binder, zinc particles, hollow glass microspheres and conductive pigment. The zinc particles may be spherical, irregularly shaped or other shapes such as spheres, needles, platelets, flakes, fibres and rods. However, we have found that the performance of coatings according to WO2014/032844 is not satisfactory in the salt spray test (ISO 9227). Specifically, as shown in the examples, protection against surface rust was found to be inadequate.

### SUMMARY OF INVENTION

Viewed from a first aspect the present invention provides a coating composition comprising:
(i) a binder;
(ii) glass flakes;
(iii) zinc flakes; and
(iv) optionally zinc dust.

Viewed from a further aspect the present invention provides a method for preparing a composition as hereinbefore described, comprising mixing:
(i) a binder;
(ii) glass flakes;
(iii) zinc flakes; and
(iv) optionally zinc dust.

Viewed from a further aspect, the present invention provides a kit for preparing a composition as hereinbefore described, comprising:
(i) a first container containing a binder, and optionally glass flakes, zinc flakes, and zinc dust;
(ii) a second container containing curing agent and/or zinc flakes and/or zinc dust, and optionally glass flakes;
wherein each of glass flakes and zinc flakes are present in at least one of said containers.

Viewed from a further aspect, the present invention provides a container containing a composition as hereinbefore described.

Viewed from a further aspect the present invention provides a method of providing a coating on a surface, wherein said method comprises:
(i) applying a composition as hereinbefore described; and
(ii) curing said composition to form a coating on the surface.

Viewed from a further aspect the present invention provides a coating on a surface, preferably a metal surface, wherein said coating comprises a composition as hereinbefore described.

Viewed from a further aspect the present invention provides a use of a composition as hereinbefore described to form a coating, preferably an anti-corrosion coating, on at least one surface of an article.

### DEFINTIONS

As used herein the term "coating composition" refers to a composition that, when applied to a surface, forms a film or coating thereon.

As used herein the term "binder" refers to a polymer which forms a continuous film on a substrate surface when applied thereto. The other components of the composition are dispersed throughout the binder.

As used herein the term "hybrid binder" refers to a polymer formed of monomers from at least two binder classes, e.g. epoxy and acrylic.

As used herein the term "epoxy-based" refers to a polymer or oligomer comprising epoxy groups and/or modified epoxy groups. The term epoxy-based binder encompasses binders that have the traditional epoxy backbone but where epoxy end-groups are modified with, e.g. acrylic or methacrylic functional groups that can be cured with the same curing agents as the epoxy groups. Often the epoxy binder will comprise at least some epoxy groups. The term epoxy is used interchangeably with epoxide.

As used herein the term "solid epoxy resin" refers to an epoxy polymer that is solid at ambient temperature and pressure (25 °C and 1 atm). Thus term "solid" refers to the physical state of the epoxy-based binder.

As used herein the term "liquid epoxy resin" refers to an epoxy polymer that is liquid at ambient temperature and pressure (25 °C and 1 atm). The term "liquid" refers to the physical state of the epoxy-based binder.

As used herein the term "epoxy" refers to a three-atom cyclic ether.

As used herein the term "epoxy binder system" refers to the combination of epoxy resin(s) and curing agent(s), and optionally reactive diluents, and accelerators.

As used herein, the phrase "equivalent epoxy weight" or "EEW" refers to the number of epoxide equivalents in 1 kg of resin. It is measured by ASTM D-1652

As used herein the term "AHEW" refers to the "Amine hydrogen equivalent weight". It is measured by potentiometric titration (ISO 9702:1996).

As used herein the term "curing agent" refers to a compound which, when mixed with the epoxy resin, produces a cured or hardened coating by generating cross-links within the polymer. Sometimes curing agents are referred to as hardeners.

As used herein the terms "curing accelerator" and "accelerator" are used synonymously and refer to compounds which increase the rate of the curing reaction to cure or harden the coating.

As used herein the term "flake" refers to physical form which has a significantly smaller thickness (e.g. at least 5 times less) compared to its diameter.

As used herein the term "spherical", when used in relation to particles, e.g. zinc or glass particles, encompasses substantially spherical and spherical particles. Substantially spherical particles are identical in size in each of the x, y and z dimensions, ± 1.2 µm, more preferably ± 0.6 µm.

As used herein the term "average diameter" refers to the Z-average diameter size as determined by ISO 22412:2017 using a Malvern Mastersizer 2000.

As used herein the term D₅₀ refers to the diameter at which 50% of the distribution of particles has a smaller particle size and 50% of the distribution has a larger particle size.

As used herein the term D₉₉ refers to the diameter at which 99% of the distribution has a smaller particle size and 1% has a larger particle size. Other D values follow the same pattern.

As used herein the term "dust" refers to spherical particles having an average diameter in the range 3 to 20 µm. Dust is therefore a type of particle, specifically relatively small particles.

As used herein the term "powder" refers to spherical particles having an average diameter in the range 21 to 100 µm. Powder is therefore a type of particle which is larger than dust.

As used herein the term "carbon nanotubes" refers to tubes consisting essentially of carbon, which have a diameter of less than 1000 nm.

As used herein the term "carbon fibre" refers to a filament or strand consisting essentially of carbon. Typical carbon fibres have a diameter of 1-20 µm and a length of 1-10,000 µm.

As used herein the term "conductive pigment" refers to a pigment, other than zinc, which conducts electricity.

As used herein the term "barrier pigment" refers to a pigment, other than glass flakes, which provides a physical shield between a metal surface and the elements of the environment, e.g. air, moisture, and/or chemicals.

As used herein the term "rheology modifier" refers to a compound which improves the uniformity of consistency during storage, and application properties, of a coating composition. Sometimes rheology modifiers are referred to as anti-settling agents.

As used herein the term "weight % (wt%)", when used in relation to individual constituents of the composition refers to the actual weight of constituent, i.e. without volatile components present, unless otherwise specified.

As used herein the term "weight % (wt%)", when used in relation to the coating compositions, refers to the weight relative to the total weight of the composition, i.e. including non-volatile and volatile components, unless otherwise specified.

As used herein the term "weight % (wt%), when used in relation to the dry coating refers to the weight relative to the total weight of the dry coating, i.e. excluding the volatile components, unless otherwise specified.

As used herein the term "Volatile Organic Compounds" refers to compounds having a boiling point ≤ 250°C at 101.3 kPa. This is the definition given in EU Directive 2004/42/CE.

As used herein the term "molecular weight" refers to weight average molecular weight (Mw), unless otherwise specified. It is determined by Gel Permeation Chromatography.

As used herein the term "density" refers to density as determined by pressure cup method (ISO 2811-4).

### DESCRIPTION OF INVENTION

The present invention relates to a coating composition comprising:
(i) a binder;
(ii) glass flakes;
(iii) zinc flakes; and
(iv) optionally zinc dust.

Optionally the coating composition of the present invention further comprises: (v) curing agent; (vi) accelerator; (vii) reactive diluent; (viii) conductive pigment; (ix) rheology modifier; (x) barrier pigments; (xi) silane; and/or (xii) additives.

The coating compositions of the present invention advantageously allow the total amount (by weight) of zinc present in the composition to be reduced without decreasing the level of corrosion resistance. The coating compositions of the invention achieve similar levels of corrosion resistance as conventional zinc dust-containing anti-corrosive coatings, with, e.g. 50 wt% or less total zinc. Additionally the compositions of the invention may achieve improved levels of corrosion resistance compared to conventional zinc dust-containing coatings. The coating compositions of the invention are also less prone to settling during storage and have a lower density than conventional zinc dust-containing coating compositions.

### Binder

The coating composition of the present invention comprises a binder. Preferably the binder is an organic binder or an inorganic binder. In some preferred compositions the binder is an organic binder. In other preferred compositions the binder is an inorganic binder.

Examples of suitable binder that may be present in the coating compositions of the invention include epoxy-based, polyurethane-based, polysiloxane-based, polyurea-based, silicate-based, phenolic-based, acrylic-based, and hybrids and mixtures thereof. Preferably the binder is epoxy-based, polysiloxane-based, or silicate-based. More preferably the binder is epoxy-based or polysiloxane-based, especially epoxy-based. In other preferred compositions the binder is a silicate-based binder.

The total amount of binder present in the coating composition of the present invention is preferably 1-70 wt%, more preferably 5-60 wt%, still more preferably 5-50 wt% and yet more preferably 10-40 wt%, based on the total weight of the coating composition.

### Epoxy-based binder

In preferred coating compositions of the present invention, the binder is epoxy-based, and preferably epoxy. The epoxy-based binder may be a modified epoxy-based binder. Optionally the epoxy-based binder is modified with fatty acids, polypropylene oxide and/or polyethylene oxide.

The coating compositions of the present invention may comprise one or more epoxy-based binders (e.g. epoxy binders). Preferred coating compositions comprise 1, 2 or 3 epoxy-based binders, e.g. epoxy binders, most preferably one epoxy-based binder, e.g. one epoxy binder.

Preferred epoxy-based binders, e.g. epoxy binder, present in the coating compositions of the present invention have an equivalent epoxy weight (EEW) of 150-2000 g/eq, more preferably 155 to 1500 g/eq, still more preferably 360-1000 g/eq and yet more preferably 400-800 g/eq. The level of EEW is important to achieve an optimal mixing ratio between the epoxy-based binder and the curing agent (e.g. 1:1 to 4:1, such as 3:1 vol solids).

The epoxy-based binder, e.g. epoxy binder, may be a liquid epoxy-based binder or a solid epoxy-based binder, or a combination thereof. Preferably, however, the epoxy-based binder is a liquid epoxy-based binder. The liquid epoxy-based binder preferably has an epoxy equivalent weight (EEW) value of 156 to 1000 and more preferably 200 - 700. More preferred epoxy-based liquid binders have an EEW of less than 600. The viscosity of the liquid epoxy-based binder is preferably 1000 - 20 000 mPa, more preferably 1500 - 15 000 mPas and still more preferably 2000 - 15 000 mPas.

Preferred epoxy-based binder comprises more than one epoxy group per molecule. Such epoxy-groups may be in an internal or terminal position on the epoxy-based binder or on a cyclic structure incorporated into the epoxy-based binder. Preferably the epoxy-based binder comprises at least two epoxy groups so that a cross linked network can be formed.

It should be understood that the epoxy-based binders of the present invention encompass binders that have the traditional epoxy backbones but where the epoxy end-groups have been modified with acrylic or methacrylic functional groups that can be cured with the same curing agents as the epoxy-groups. In these epoxy-based binders, the end-groups are preferably functionalised with acrylic and/or methacrylic functional groups.

Preferably the coating compositions of the present invention comprise one or more epoxy-based binders (e.g. epoxy binder) selected from aromatic or aliphatic epoxy-based binders.

Representative examples of suitable aliphatic epoxy-based binders include epoxy, and modified epoxy, binders selected from cycloaliphatic epoxy such as hydrogenated bisphenol A, hydrogenated bisphenol A novolac, dicyclopentadiene based binders, glycidyl ethers such as polyglycidyl ethers of polyhydric alcohols, epoxy functional acrylic resins or any combination thereof.

Representative examples of suitable aromatic epoxy-based binders includes epoxy, and modified epoxy, binders selected from bisphenol type such as bisphenol A, bisphenol F and bisphenol S, resorcinol diglycidyl ether (RDGE), novolac type epoxy-based binders such as phenolic novolac type binders (bisphenol A novolac, bisphenol S novolac) and cresol novolac type binder or any combination thereof.

Preferably the coating compositions of the present invention comprise an aromatic epoxy-based binder, e.g. an aromatic epoxy binder. Preferably the aromatic epoxy-based binder is derived from a combination of a compound comprising a least one epoxide functionality with an aromatic co-reactant comprising at least two hydroxyl groups.

Preferred examples of epoxy-based binders for use in the compositions of the invention are bisphenol A based binders, 4,4'- isopropylidenediphenol-epichlorohydrin resins, bisphenol F based binders, novolac based binders and hybrids and mixtures thereof. Particularly preferred epoxy-based binders are bisphenol A based binders, bisphenol F based binders and hybrids and mixtures thereof. In some compositions, the binder is preferably bisphenol A epoxy binder. In other compositions, the binder is preferably bisphenol F epoxy binder. In yet other compositions, the binder is preferably a mixture of bisphenol A and bisphenol F epoxy binders.

Bisphenol A epoxy-based binders will be known to those skilled the field and have the general structure below.

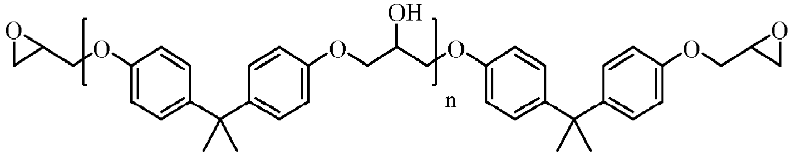

Some preferred coating composition of the invention comprise one or more bisphenol F epoxy-based binders. A combination of two or more bisphenol F binders may optionally be used. It has been found that bisphenol F epoxy-based binders reduce the viscosity of the coating composition relative to coating compositions that comprise the more common bisphenol A epoxy-based binders. In turn this enables high solids, solvent free, coating compositions to be prepared, thereby reducing VOC.

Preferred bisphenol F epoxy-based binder has an EEW of 100-350. More preferably the EEW is 300 or less, e.g. 100-300, more preferably 150 to 250. Preferred bisphenol F epoxy-based binder is liquid. The viscosity of the bisphenol F epoxy-based binder is preferably 1000-10 000 mPas, and more preferably 2000-5000 mPas

A preferred bisphenol F (4',4'-methylenebisphenol) epoxy-based binder derives from the combination of bisphenol F and epichlorohydrin. The use of a difunctional epoxy-based bisphenol F binder is especially preferred.

The solids content of the epoxy-based binder is preferably more than 70 wt%, preferably more than 80 wt%, preferably more than 90 wt%, most preferred more than 99 wt%. Preferably the epoxy-based binder is solvent free.

Suitable epoxy-based binder for use in the coating compositions of the invention are commercially available. Examples of commercially available epoxy-based binders suitable for the coating compositions include:
- Bisphenol A type epoxy-based binders: Epikote 828, Epikote 1004, Epikote 1001 X 75 and Epikote 1009 from Hexion. Araldite GY 250, Araldite GZ 7071X75BD and Araldite GZ 7071X75CH from Huntsman Advanced Materials. DER 664-20 and DER 684-EK40 from Dow Chemicals;
- Bisphenol F epoxy-based binders: Epikote 862 from Hexion, YDF- 170 from Kukdo, GY285 from Huntsman, DER 354 from Dow, BFE-170 from CCP, or KF8100 from Kolon;
- Mixture of bisphenol A and bisphenol F: DER 352 and DEN 438-X 80 from Dow Chemicals, Epikote 235 from Hexion; and
- Beckopox EP 385 W and Beckopox VEP 2381 W from Cytex Surface Specialities. Epicote 3540 WY-55A and EPI-REZ DPW 6520 from Momentive.

The total amount of epoxy-based binder (i.e. liquid and solid) present in the coating composition of the present invention is preferably 5-60 wt%, more preferably 5-50 wt%, still more preferably 10-45 wt% and yet more preferably 10-30 wt%, based on the total weight of the coating composition. The total amount of epoxy-based binder (i.e. liquid and solid) present in the coating composition is preferably 5-70 wt%, more preferably 5-55 wt% and still preferably 10-35 wt%, based on the weight of the dry coating.

### Polysiloxane-based binder

The polysiloxane-based binder present in the coating composition of the present invention may be any curable polysiloxane-based binder.

The polysiloxane-based binder is preferably an organopolysiloxane with terminal and/or pendant curing-reactive functional groups. A minimum of two curing-reactive functional groups per molecule is preferred. Examples of curing-reactive functional groups are silanol, alkoxy, acetoxy, enoxy, ketoxime, alcohol, amine, epoxy and/or isocyanate. A preferred polysiloxane-based binder contains curing-reactive functional groups selected from silanol, alkoxy or acetoxy groups. The curing reaction is typically a condensation cure reaction. The polysiloxane-based binder optionally comprises more than one type of curing-reactive group and may be cured, for example, via both condensation cure and amine/epoxy curing.

The polysiloxane-based binder present in the coating compositions of the present invention preferably comprises at least 30 wt% polysiloxane parts, preferably more than 50 wt% polysiloxane parts and still more preferably more than 70 wt% polysiloxane parts such as 99.99 wt% polysiloxane parts or more. Optionally the polysiloxane-based binder is pure polysiloxane.

The polysiloxane parts are defined as repeat units comprising the motif -Si-O-based on the total weight of the polysiloxane-based binder. The wt% of polysiloxane parts can be determined based on the stoichiometric wt ratio of starting materials in the polysiloxane synthesis. Alternatively, the polysiloxane content can be determined using analytical techniques such as IR or NMR. Information about the wt% polysiloxane parts in a commercially available polysiloxane-based binder is easily obtainable from the supplier.

It is to be understood that the polysiloxane-based binder can consist of a single repeating sequence of siloxane units or be interrupted by non-siloxane parts, e.g. organic parts. The organic parts may comprise, for example, alkylene, arylene, poly(alkylene oxide), amide, thioether or combinations thereof, preferably the organic parts may comprise, for example, alkylene, arylene, poly(alkylene oxide), amide, or combinations thereof.

In one preferred coating composition of the invention the polysiloxane-based binder comprises amine functional groups either in a terminal or pendant position.

The polysiloxane-based binder may consist of only one type of polysiloxane or be a mixture of different polysiloxanes.

In one preferred coating composition the polysiloxane-based binder is a branched polysiloxane-based binder.

A preferred polysiloxane-based binder present in the coating compositions of the present invention is represented by formula (D1) below: 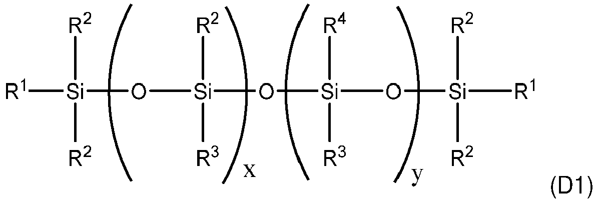 wherein
each R¹ is independently selected from a hydroxyl group, C₁₋₆-alkoxy group, C₁₋₆-hydroxyl group, C₁₋₆-epoxy containing group, C₁₋₆ amine group, C₁₋₁₀ alkyl, C₆₋₁₀ aryl, C₇₋₁₀ alkylary or O-Si(R⁵)_{3-z}(R⁶)_{z}
each R² is independently selected from C₁₋₁₀ alkyl, C₆₋₁₀ aryl, C₇₋₁₀ alkylaryl or C₁₋₆ alkyl substituted by poly(alkylene oxide) and/or a group as described for R¹;
each R³ and R⁴ is independently selected from C₁₋₁₀ alkyl, C₆₋₁₀ aryl, C₇₋₁₀ alkylaryl or C₁₋₆ alkyl substituted by poly(alkylene oxide);
each R⁵ is independently a hydrolysable group such as C₁₋₆ alkoxy group, an acetoxy group, an enoxy group or ketoxy group;
each R⁶ is independently selected from an unsubstituted or substituted C₁₋₆ alkyl group;
z is 0 or an integer from 1-2;
x is an integer of at least 2;
y is 0 or an integer of at least 1.

Preferably R¹ is selected from a hydroxyl group and O-Si(R⁵)_{3-z}(R⁶)_{z}, wherein R⁵ is a C₁₋₆ alkoxy group, R⁶ is C₁₋₆ alkyl and z is 0 or an integer from 1-2. More preferably R¹ is selected from a hydroxyl group and O-Si(R⁵)₃-_{z}(R⁶)_{z}, wherein R⁵ is a C₁₋₃ alkoxy group, R⁶ is C1-3 alkyl and z is 0 or an integer from 1-2.

Preferably R² is a C₁₋₁₀ alkyl group, C₆₋₁₀ aryl, C₇₋₁₀ alkylaryl or O-Si(R⁵)_{3-z}(R⁶)_{z}

Preferably R³ is a C₁₋₁₀ alkyl group or C₆₋₁₀ aryl. More preferably R³ is a C₁₋₄ alkyl group or a C₆ aryl group, still more preferably a C₁₋₂ alkyl group or a C₆ aryl group, and yet more preferably a methyl group or a phenyl group.

Preferably R⁴ is a C₁₋₁₀ alkyl group or C₆₋₁₀ aryl. More preferably R³ is a C₁₋₄ alkyl group or a C₆ aryl group, still more preferably a C₁₋₂ alkyl group or a C₆ aryl group, and yet more preferably a methyl group or a phenyl group.

In one preferred coating composition the polysiloxane-based binder of the present invention is a branched polysiloxane comprising methyl, phenyl and methoxy groups.

The weight average molecular weight of the polysiloxane-based binder present in the coating compositions of the present invention is preferably 400-150,000 g/mol, more preferably 1000-120,000 g/mol, and still more preferably 5000-110,000 g/mol.

Suitable polysiloxane-based binders for use in the coating composition of the present invention are commercially available. Representative commercially available polysiloxane-based binders include REN 50 and REN 80 from Wacker, Silikophen P50X and Silikophen P80X from Evonik.

Preferred coating compositions of the present invention comprise 10-70 wt% polysiloxane-based binder, more preferably 10-50 wt% polysiloxane-based binder and still more preferably 10-45 wt% polysiloxane-based binder, based on the total dry weight of the composition.

### Polyurethane-based binder

In preferred coating compositions of the present invention, the organic binder is polyurethane-based, and preferably polyurethane.

One preferred polyurethane-based binder for use in the coating compositions of the present invention comprises: a) a poly-isocyanate component and b) a hydroxy functional component, comprising at least two hydroxyl groups. The cross-linking is from the reaction between the poly-isocyanate component a) and hydroxyl functional component b).

Suitable poly-isocyanates for use as poly-isocyanate component a) in the coating composition are well known in the art. Examples of suitable low molecular weight poly-isocyanates, having a molecular weight of 168 to 300 g/mol, include: hexamethylene diisocyanate (HDI), 2,2,4- and/or 2,4,4-trimethyl-1,6-hexamethylene diisocyanate, dodecamethylene diisocyanate, 2,4-diisocyanato-1-methyl-benzene (toluene diisocyanate, TDI), 2,4-diisocyanato-1-methylbenzene, 1,4-diisocyanatocyclohexane, 1-isocyanato-3,3,5-trimethyl-5- isocyanatomethylcyclohexane (IPDI), 2,4'-and/or 4,4'-diisocyanato-dicyclohexyl methane, 2,4-and/or 4,4'-diisocyanato-diphenyl methane and mixtures of these isomers with their higher homologues which are obtained in a known manner by the phosgenation of aniline/formaldehyde condensates, 2,4-and/or 2,6-diisocyanatotoluene, and any mixture of these compounds.

In some preferred coating compositions of the present invention the polyisocyanate component a) is selected from aliphatic polyisocyanates, e.g. hexamethylene diisocyanate (HDI), 2,2,4-and/or 2,4,4-trimethyl-1,6-hexamethylene diisocyanate, dodecamethylene diisocyanate, 1,4-diisocyanatocyclohexane, 1-isocyanato-3,3,5-trimethyl-5-isocyanatomethylcyclohexane (IPDI), 2,4'-and/or 4,4'-diisocyanato-dicyclohexyl methane, and 2,4-and/or 4,4'-diisocyanato-diphenyl methane.

In other preferred coating compositions of the present invention the polyisocyanate component a) is selected from aromatic polyisocyanates, e.g. 2,4-diisocyanato-1-methyl-benzene (toluene diisocyanate, TDI), 2,4-diisocyanato-1-methylbenzene and mixtures of these isomers with their higher homologues which are obtained in known manner by the phosgenation of aniline/formaldehyde condensates, 2,4-and/or 2,6-diisocyanatotoluene and any mixtures of these compounds.

In preferred coating compositions of the present invention the polyisocyanate component a) is a derivative of the above-mentioned monomeric poly-isocyanates, as is conventional in the art. These derivatives include polyisocyanates containing biuret groups. Examples of particularly preferred derivatives include N,N',N"-tris-(6-isocyanatohexyl)-biuret and mixtures thereof with its higher homologues and N,N',N"-tris-(6-isocyanatohexyl)-isocyanurate and mixtures thereof with its higher homologues containing more than one isocyanurate ring.

Examples of suitable commercially available poly-isocyanates are:
Desmodur N3900 (formerly VP2410), ex. Bayer (Germany), aliphatic polyisocyanate
Desmodur N3600, ex. Bayer (Germany), aliphatic polyisocyanate
Desmodur N3800, ex. Bayer (Germany), aliphatic polyisocyanate
Tolonate HDT-LV2, ex. Rhodia (France), aliphatic polyisocyanate
Desmodur N3390, ex. Bayer (Germany), aliphatic polyisocyanate
Tolonate HDT90, ex. Rhodia (France), aliphatic polyisocyanate
Basonat HI 190 B/S, ex. BASF (Germany), aliphatic polyisocyanate
Desmodur N75, ex. Bayer (Germany), aliphatic polyisocyanate
Bayhydur VP LS 2319, ex. Bayer (Germany), aliphatic polyisocyanate
Tolonate IDT 70B, ex. Rhodia (Frane), aliphatic polyisocyanate
Desmodur H, ex Bayer (Germany).
Basonat HB 175 MP/X BASF - Germany aliphatic polyisocyanate

Examples of suitable commercially available aromatic polyisocyanate resins are:
Desmodur L67 BA (Bayer Material Science)
Desmodur E21 (Bayer Material Science)
Desmodur VL (Bayer Material Science)
Voratron EC 112 (Dow Chemicals)
Desmodur E23 (Bayer Material Science)
Desmodur E 1660 (Bayer Material Science)
Suprasec 2495 (Huntsman Advanced Materials).

Isocyanate group-containing prepolymers and semi-prepolymers based on the monomeric poly-isocyanates mentioned above, and organic polyhydroxyl compounds, are also preferred for use as poly-isocyanate component a). These pre-polymers and semi pre-polymers generally have an isocyanate content of 0.5-30 % by weight, preferably 1-20 % by weight, and are prepared in a known manner by the reaction of the above mentioned starting materials at an NCO/OH equivalent ratio of 1.05:1 to 10:1 preferably 1.1:1 to 3:1, this reaction being optionally followed by distillative removal of any un-reacted volatile starting poly-isocyanates still present.

The pre-polymers and semi pre-polymers may be prepared from polyhydroxyl compounds having a molecular weight of 62 to 299 g/mol. Examples include ethylene glycol, propylene glycol, trimethylol propane, 1,6-dihydroxy hexane; low molecular weight, hydroxyl-containing esters of these polyols with dicarboxylic acids of the type exemplified hereinafter; low molecular weight ethoxylation and/or propoxylation products of these polyols; and mixtures of the afore-mentioned polyvalent modified or unmodified alcohols.

Preferably the pre-polymers and semi pre-polymers are prepared from relatively high molecular weight polyhydroxyl compounds. These polyhydroxyl compounds have at least two hydroxyl groups per molecule and more preferably have a hydroxyl group content of 0.5-17 % by weight, preferably 1-5 % by weight.

Examples of commercially available polyester polyols include:
Desmophen 651 MPA, ex. Bayer (Germany)
Desmophen VP LS 2089, ex. Bayer Material Science (Germany)

Polyether polyols, which are obtained in a known manner by alkoxylation of suitable starting molecules, are also suitable for the preparation of the isocyanate group-containing pre-polymers and semi pre-polymers. Examples of suitable starting molecules for the polyether polyols include the previously described monomeric polyols, water, and any mixture thereof. Ethylene oxide and/or polylene oxide are particularly suitable alkylene oxides for the alkoxylation reaction. These alkylene oxides may be introduced into the alkoxylation reaction in any sequence or as a mixture.

Examples of commercial available polyether polyols include:
Desmophen 1380 BT 03/2008 (previously Desmophen 550 U), ex. Bayer Material Science (Germany)
Voranol CP 450 Polyol, ex. Dow Chemicals (Germany)

Hydroxyl group-containing polycarbonates, which may be prepared by the reaction of the previously described monomeric diols with phosgene and diaryl carbonates such as diphenyl carbonate, are also suitable for the preparation of the pre-polymers and semi pre-polymers.

Preferably component b) is based in whole or in part on organic polyhydroxyl compounds and include both low molecular weight polyhydroxyl compounds and relatively high molecular weight polyhydroxyl compounds as hereinbefore described for the preparation of the pre-polymers and semi pre-polymers suitable for use as poly-isocyanate component a).

Particularly preferred hydroxyl functional, isocyanate-reactive, compounds that may be used as component b) are the hydroxy functional poly acrylates known for use in polyurethane coatings. These compounds are hydroxyl-containing copolymers of olefinically unsaturated compounds having a number average molecular weight (Mn) determined by vapour pressure or membrane osmometry of 800-50,000, preferably 1000-20,000 and more preferably 5000-10,000, and having a hydroxyl group content of 0.1-12 % by weight, preferably 1-10 % by weight and most preferably 2-6 % by weight. The copolymers are based on olefinic monomers containing hydroxyl groups and olefinic monomers that are free from hydroxyl groups. Examples of suitable monomers include vinyl and vinylidene monomers such as styrene, α-methyl styrene, o- and p-chloro styrene, o-, m- and p-methyl styrene, p-tert-butyl styrene; acrylic acid; (methy)acrylonitrile; acrylic and methacrylic acid esters of alcohols containing 1 to 8 carbon atoms such as ethyl acrylate, methyl acrylate, n- and isopropyl acrylate, n-butyl acrylate, 2-ethylhexyl acrylate, 2-ethylhexyl methacrylate, iso-octyl acrylate, methyl methacrylate, ethyl methacrylate, butyl methacrylate and iso- octyl methacrylate; diesters of fumaric acid, itaconic acid or maleic acid having 4 to 8 carbon atoms in the alcohol component; (methy)acrylic acid amide; vinyl esters of alkane monocarboxylic acids having 2 to 5 carbon atoms such as vinyl acetate or vinyl propionate; and hydroxyalkyl esters of acrylic acid or methacrylic acid having 2 to 4 carbon atoms in the hydroxyalkyl group such as 2- hydroxyethyl-, 2, hydroxypropyl-, 4-hydroxybutyl-acrylate and methacrylate and trimethylol propane-mono- or pentaerythritomono-acrylate or methyacrylate. Mixtures of the afore-mentioned monomers may also be used for the preparation of the hydroxy functional poly acrylates. Mixtures of the polyhydroxyl compounds hereinbefore described may also be used as component b).

In preferred polyurethane based binders, components a) and b) are used in amounts sufficient to provide an equivalent ratio of isocyanate groups to isocyanate-reactive (hydroxyl) groups of 0.8:1 to 20:1, preferably 0.8:1 to 2:1, more preferably 0.8: 1 to 1.5:1, even more preferably 0.8:1 to 1.2:1 and most preferably about 1:1. The hydroxyl functional compound b) is preferably present in an amount such that up to 20 hydroxyl groups are present. Preferably the equivalent ratio of hydroxyl groups to secondary amino groups is 10:1 to 1:10.

Examples of suitable commercially available hydroxyl functional (isocyanate-reactive) resins include:
Synocure 878 N 60, ex. Arkema (France), hydroxyl functional acrylic resin in aromatic hydrocarbon.
Synthalat A 0 77, ex. Synthopol Chemie (Germany)
Synthalat A 045, ex. Synthopol Chemie (Germany)
Synthalat A 088 MS, ex. Synthopol Chemie (Germany)
Synthalat A 141 HS 05, ex. Synthopol Chemie (Germany)
Synthalat A 060, ex. Synthopol Chemie (Germany)
Desmophen A XP 2412, ex. Bayer Material Science (Germany)
Synthalat A-TS 1603, ex. Synthopol Chemie (Germany)
Acrylamac 332-2629, ex. Momentive (Germany)

### Polyurea-based binder

In some preferred coating compositions of the present invention the organic binder is a polyurea-based binder and preferably polyurea. The polyurea-based binder comprises a di or poly-isocyanate component and an amine functional component comprising at least two amine groups.

Suitable poly-isocyanates for use in the coating composition are well known in the art. Examples of suitable poly-isocyanates are as described for the polyurethane-based binder above.

The amine groups in the amine functional component are preferably primary or secondary amine groups. More preferably the amine groups are secondary amine groups.

Particularly preferably the amine groups have been pre-reacted with esters of for example maleic acid and fumaric acid to create polyaspartic acid ester derivatives. Preferred polyaspartic acid ester derivatives are represented by the formula below: 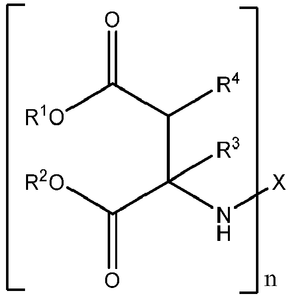 wherein X represents an organic group that is inert towards isocyanate groups at temperatures of up to 100 °C;
each R¹ and R² are independently selected from organic groups that are inert towards isocyanate groups at temperatures of up to 100 °C;
each R³ and R⁴ are independently selected from hydrogen and organic groups that are inert towards isocyanate groups at temperatures of up to 100 °C;
n is an integer of at least 2.

Examples of suitable amine functional components include ethylene diamine, 1,2-diaminopropane, 1,4-diaminobutane, 1,6-diaminohexane, 2,5-diamino-2,5-dimethylhexane, 2,2,4- and/or 2,4,4-trimethyl-1,6-diaminohexane, 1,11-diaminoundecane, 1,12-diaminoundecane, 1-amino-3,3,5-trimethyl-5-aminomethyl-cyclohexane, 2,4 and/or 2,6-hexahydrotoluylene diamine, 2, 4'-and/or 4, 4'-diamino-dicyclohexyl methane and 3, 3'-dimethyl-4,4'-diamino-dicyclohexyl methane. Aromatic polyamines such as 2,4-and/or 2,6-diaminotoluene and 2,4'-and/or 4,4'-diaminophenyl methane are also suitable. Polyether polyamines may also be used.

### Silicate-based binder system

In preferred coating compositions of the present invention, the binder is silicate-based, and preferably silicate. The silicate-based binder, e.g. silicate binder, comprises one or more silicate-based binders, and optionally catalysts and accelerators.

The silicate-based binder may be solvent-based or water-based. Preferably the silicate-based binder is solvent based.

A preferred solvent based silicate-based binder for use in the compositions of the invention is an "alkyl silicate"-based binder. By "alkyl silicate"-based binder, it is meant that the binder comprises alkoxy groups bound to the silicon atoms. The alkoxy groups preferably comprise 1-12 carbon atoms, more preferably 1-8 carbon atoms, and still more preferably 1-6 carbon atoms. Examples of suitable alkyl silicate-based binders include methyl silicate, ethyl silicate, propyl silicate, butyl silicate and hexyl silicate. A particularly preferred alkyl silicate-based binder is ethyl silicate.

Optionally, the alkyl silicate-based binder is partially hydrolysed. Hydrolysis may be carried out to various degrees. The binder may be hydrolyzed using water and an acid or base catalyst. Preferably an acid catalyst is used. Examples of suitable acid catalysts are organic acids such as oxalic acid, citric acid, maleic acid, malic acid, acetic acid, propanoic acid, butanoic acid, methanoic (formic) acid and p-toluenesulphonic acid and inorganic acids such as hydrochloric acid, sulfuric acid, phosphoric acid and nitric acid.

The starting materials for preparation of alkyl silicate-based binders are preferably monomeric, or oligomeric, alkyl silicates such as tetraethyl ortho silicate (TEOS). Examples of suitable commercially available ethyl silicate starting materials are: Dynasylan 40 from Evonik, Silikat TES 40 WN and Silikat TES 28 from Wacker Chemie and Silbond 40 from Silbond Corporation.

In a typical preparation process of an alkyl silicate-based binder, the starting material for the alkyl silicate-based binder is partially hydrolysed, e.g. by addition of water and an acid catalyst. Preferably the degree of pre-hydrolysis of the alkyl silicate-based binder is more than 50 %, preferably 60-95 %, and still more preferably 75-90 %.

Preferred water-based silicate-based binder preferably comprises alkali metal silicates such as lithium silicate, sodium silicate, potassium silicate, and ammonium silicates such as tetraethanol ammonium silicate, diethanol morpholinium silicate. Preferably the alkali metal silicate is lithium silicate, sodium silicate or potassium silicate.

Examples of commercially available water-based alkali silicates are Kali wasserglass 28/30 from BASF and Ludox lithium Polysilicate and Ludox HS40 from Grace Division.

When an alkyl silicate-based binder is mixed with zinc particles the pH in the resulting coating composition is increased and the rate of the condensation curing reaction increases. Therefore, the silicate-based binder and the zinc particles are preferably stored in different containers.

The coating composition of the present invention preferably comprises 1-70 wt% of silicate-based binder, more preferably 5-65 wt%, most preferred 5-50 wt% based on the total weight of the coating composition.

### Curing agent

The coating composition of the invention optionally comprises a curing agent. The coating composition preferably comprising a curing agent when the binder is selected from epoxy-based, preferably epoxy, phenolic-based, polysiloxane-based, polyurethane-based, and hybrids and mixtures thereof. When the binder is acrylic-based or silicate-based, a curing agent is optionally present.

When present the curing agent reacts with the binder, e.g. epoxy-based binder, during curing to form a coating, e.g. a film coating. The curing agent therefore facilitates the provision of a coating composition with an acceptable cure time. The curing agent preferably cures the binder at temperatures ranging from 0-60 °C and more preferably 0 to 30 °C. It is preferred if the binder cures at ambient temperatures, more preferably 10 to 25 °C.

Conventional curing agents may be used in the coating composition of the present invention. The coating composition of the invention may comprise one curing agent, or a mixture of curing agents. Preferably only a single curing agent is present.

The total amount of binder and curing agent(s) in the coating composition of the invention is preferably 10 to 80 wt%, more preferably 10 to 70 wt% and still more preferably 15 to 60 wt%, based on the total weight of the coating composition. The total amount of curing agent(s) in the coating composition of the invention is preferably 0.1 to 30 wt%, more preferably 0.2 to 20 wt%, and still more preferably 0.5 to 15 wt.%, based on the total weight of the coating composition.

### Curing Agents for Epoxy-based binders

To obtain a cross-linked network with an epoxy-based binder the curing agent must contain at least two "reactive" hydrogen atoms. The term "reactive" refers to hydrogen atoms that may be transferred from the nucleophile to the oxygen atom of the epoxide during the ring opening reaction. The curing agent typically contains at least two curing reactive functional groups.

Representative examples of classes of suitable curing agents that may be used with epoxy-based binders include thiol curing agents, polythiol curing agents, amine curing agents, polyamine curing agents, and/or amino functional polymer curing agents. The curing agent may also alternatively comprise at least one amino functional polysiloxane. The coating compositions of the present invention may comprise a mixture of curing agents.

Examples of suitable polythiol curing agents include pentaerythriol tetramercapto propionate. An example of a suitable commercially available polythiol curing agent is GABEPRO® GPM800 from Gabriel performance materials.

Preferred coating compositions of the present invention comprise an amine curing agent, a polyamine curing agent, or an amino functional polymer curing agent or a mixture thereof. More preferably the coating composition comprises at least one amine functional curing agent.

Preferably the curing agent contains at least two amine groups. The amine groups may be primary or secondary.

Suitable amine, polyamine, and amino functional polymer curing agents are selected from aliphatic amines and polyamines (e.g. cycloaliphatic amines and polyamines), polyamido amines, polyoxy alkylene amines (e.g. polyoxy alkylene diamines), alkylene amines (e.g. alkylene diamines), aralkyl amines, aromatic amines, Mannich bases (e.g. those sold commercially as "phenalkamines"), amino functional silicones or silanes, and epoxy adducts and derivatives thereof.

Examples of suitable commercially available amine functional curing agents include:
Cardolite NC-541, Cardolite Lite 2001 and Cardolite Lite 2002 from Cardanol Chemicals;
Sunmide CX-105X, Sunmide 305-70X, Sunmide 360-65K, Ancamine 2609, Ancamine 2695, Ancamine 2738, Ancamide 260A, Ancamide 500, Ancamide 506, Ancamide 2386, Ancamine 2759, Ancamine 2760, Ancamine 1618, Ancamine 2165, Ancamine 2280, Ancamine 2432, Ancamine 2519, Ancamine 2802, Ancamine 2609w, Ancamine 2806 from Evonik;
Epikure 3090, Epikure 3140 and Epikure 3115-X-70 from Hexion;
Mannich base AP1077 from Admark Polycoats;
MXDA and Gaskamine 240 from Mitsubishi Gas Chemical Company Inc;
Aradur 42 BD and Aradur 943 CH from Huntsman Advanced Materials.

In one preferred coating composition of the invention comprising epoxy-based binder the curing agent is a Mannich base (phenalkamine) curing agent. Phenalkamines are obtained from cardanol, a major component of cashew nutshell liquid. Phenalkamines contain aliphatic or cycloaliphatic polyamine substituents attached to an aromatic ring. Suitable commercially available Mannich base (phenalkamine) curing agents are available from Cardolite. Examples include Cardolite NC 541, Cardolite Lite 2001 and Cardolite Lite 2002.

In other preferred coating compositions of the invention comprising epoxy-based binder the curing agent is an amine functional polyamide curing agent.

The curing agent may be supplied neat or in a solvent. Preferably, however, the curing agent is solvent free. A key parameter of the curing agent is its viscosity. Preferably the curing agent has a viscosity below 2000 mPas, more preferably below 1500 mPas. Such viscosities facilitate the preparation of compositions with higher volume solids and lower VOCs.

It is common in this field to quote the equivalent weight of the curing agent in terms of the "active hydrogen equivalent weight". The number of "active hydrogen equivalents" in relation to the one or more curing agents is the sum of the contribution from each of the one or more curing agents. The contribution from each of the one or more curing agents to the active hydrogen equivalents is defined as grams of the curing agent divided by the active hydrogen equivalent weight of the curing agent, where the active hydrogen equivalent weight of the curing agent is determined as: grams of the curing agent equivalent to 1 mol of active hydrogen. For adducts with epoxy-based binder, the contribution of the reactants before adduction is used for the determination of the number of "active hydrogen equivalents" in the complete epoxy-based binder system.

It is also common to quote the number of "epoxy equivalents" in the epoxy-based binders. The "epoxy equivalents" is the sum of the contribution from each of the one or more epoxy-based binders and any other component that contains an epoxy such as a silane or a reactive diluent. The contribution from each of the one or more epoxy-based binders to the epoxy equivalents is defined as grams of the epoxy-based binder divided by the epoxy equivalent weight of the epoxy-based binder, where the epoxy equivalent weight of the epoxy-based binder is determined as: grams of the epoxy resin equivalent to 1 mol of epoxy groups. For adducts with epoxy-based binder the contribution of the reactants before adduction is used for the determination of the number of "epoxy equivalents" in the epoxy-based binder system.

In preferred coating compositions of the invention the ratio between the hydrogen equivalents of the totality of the curing agents and the totality of epoxy equivalents in the epoxy-based binder system of the present invention is in the range of 50: 100 to 120: 100. Further preferred epoxy-based binder systems have a ratio between the hydrogen equivalents of the curing agent and the epoxy equivalents of the epoxy resin in the range of 60: 100 to 130: 100 such as 80: 100 to 120: 100, e.g. 90: 100 to 110: 100.

It will be appreciated that the curing agent is shipped separately to the epoxy-based binder and is only mixed with the epoxy-based binder shortly before application. The mixing ratio of the compositions comprising the epoxy-based binder and the curing agent is of course governed by the relative amounts of epoxy and active hydrogens present. Ideally, the mixing ratio in solids volume is 1:1 to 10:1, first to second composition, such as 5:1 to 2:1. The curing agent composition and the epoxy-based binder composition are mixed shortly before application to the substrate.

In some coating compositions, the curing agent is employed without the use of a separate catalyst to accelerate the cross-linking process. Some known curing agents are however combined with a catalyst such as a tertiary amine catalyst. Suitable catalysts are described below under the heading Accelerator.

The total amount of binder, e.g. epoxy-based binder, and curing agent(s) is preferably 10 to 80 wt%, more preferably 15 to 70 wt% and still more preferably 20 to 60 wt%, based on the total weight of the coating composition. The total amount of curing agent(s) in the coating composition of the invention is preferably 0.1 to 30 wt% and still more preferably 0.2 to 20 wt%, based on the total weight of the coating composition.

The total amount of binder, e.g. epoxy-based binder, and curing agent(s) is preferably 10 to 80 wt%, more preferably 15 to 70 wt% and still more preferably 20 to 60 wt%, based on the weight of the dry coating. The total amount of curing agent(s) in the coating composition of the invention is preferably 0.1 to 30 wt% and still more preferably 0.2 to 20 wt%, based on the weight of the dry coating.

### Curing agents for Polysiloxane-based Binders

As described above, the polysiloxane-based binder that may be present in the coating compositions of the present invention is curable and contains curing-reactive functional groups, such as silanol, carbinol, carboxyl, ester, hydride, alkenyl, vinyl ether, allyl ether, alkoxysilane, ketoxime, amine, epoxy, isocyanate and/or alkoxy groups. Preferably the polysiloxane-based binder contains at least two curing-reactive functional groups. Optionally the polysiloxane-based binder comprises more than one type of curing-reactive functional group. Preferably the polysiloxane-based binder comprises a single type of curing-reactive functional group. The appropriate crosslinking and/or curing agents are chosen depending on the curing-reactive functional groups present in the polysiloxane-based binder.

In preferred polysiloxane-based binders the curing-reactive functional groups are silanol, carbinol, alkoxysilane, isocyanate, amine and/or epoxy. In still further preferred polysiloxane-based binders the curing-reactive functional groups are silanol, amine and/or alkoxysilane.

It may be necessary to add a crosslinker to obtain the desired crosslinking density. If the curing-reactive functional groups are silanol, a preferred crosslinking agent is an organosilicon compound represented by the general formula shown below, a partial hydrolysis-condensation product thereof, or a mixture of the two:

R_{d}-Si-K_{4-d}

wherein,
each R is independently selected from an unsubstituted or substituted monovalent hydrocarbon group of 1 to 6 carbon atoms or a C₁₋₆ alkyl substituted by poly(alkylene oxide);
each K is independently selected from a hydrolysable group such as an alkoxy group; and d is 0, 1 or 2, more preferably 0 or 1.

Preferred crosslinkers of this type include tetraethoxysilane, vinyltris(methylethyloximo)silane, methyltris(methylethyloximo)silane, vinyltrimethoxysilane, methyltrimethoxysilane and vinyltriisopropenoxysilane, as well as hydrolysis-condensation products thereof.

If the curing-reactive functional groups are di or tri-alkoxy, a separate crosslinking agent is generally not required.

The crosslinking agent is preferably present in amount of 0-10 wt% of the total dry weight of the coating composition. Suitable crosslinking agents are commercially available, such as Silcate TES-40 WN from Wacker and Dynasylan A from Evonik.

If the curing-reactive functional groups are amine, epoxy or isocyanate, the curing agents are preferably amine, sulfur or epoxy functional.

The curing agents can also be dual curing agents containing, for example, both amine/sulphur/epoxy/isocyanate and an alkoxysilane. Preferred dual curing agents are represented by the general formula below: 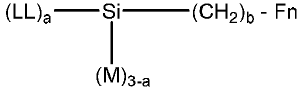 wherein
LL is independently selected from an unsubstituted or substituted monovalent hydrocarbon group of 1 to 6 carbon atoms;
each M is independently selected from a hydrolysable group such as an alkoxy group; a is 0, 1 or 2, preferably 0 or 1;
b an integer from 1 to 6; and
Fn is an amine, epoxy, glycidyl ether, isocyanate or sulphur group.

Preferred examples of such dual curing agents include 3-isocyanatopropyltrimethoxysilane, 3-isocyanatopropyltriethoxysilane, 3-aminopropyltrimethoxysilane, 3-aminopropyltriethoxysilane, (3-glycidoxypropyl)trimethoxysilane, 3-mercaptopropyltrimethoxysilane. One particularly preferred curing agent is 3-aminopropyltriethyoxysilane such as Dynasylan AMEO from Evonik.

This type of dual-curing agents can be used as a separate curing agent or be used to end-cap the polysiloxane-based binder so that the end-groups of the polysiloxane-based binder are modified prior to the curing reaction. For example, the mixing of the polysiloxane-based binder and the curing agent can be carried out shortly before application of the coating to an article, e.g. an hour or less before coating or the polysiloxane-based binder can be supplied in curable form but kept dry in order to prevent premature curing. In some compositions the curing agent/end capping agent is preferably supplied separately to the rest of the coating composition to prevent curing before the coating has been applied to the object.

### Accelerator

The coating composition of the present invention optionally further comprises a curing accelerator. In some preferred coating compositions, a curing accelerator is not present. In such compositions, the curing agent is employed without the use of a separate catalyst to accelerate the crosslinking process. In other preferred coating compositions a curing accelerator is employed to speed up the rate of the curing reaction to form a coating, e.g. a film coating.

Any conventional curing accelerator may be present in the coating compositions of the present invention.

The total amount of curing accelerator present in the coating composition of the present invention is preferably 0-5 wt%, more preferably 0.1-5 wt% and still more preferably 0.1-2 wt%, based on the total weight of the coating composition.

The total amount of curing accelerator present in the coating composition of the present invention is preferably 0-5 wt%, more preferably 0.1-5 wt% and still more preferably 0.1-2 wt%, based on the weight of the dry coating.

### Accelerators for Epoxy-based Binders

When the binder is epoxy-based (e.g. epoxy binder) the curing accelerator may be any known curing accelerator for epoxy-based coating systems. Examples include tertiary amines, (meth)acrylic esters, imidazoles, organic acids, phenols and organic phosphines.

Examples of suitable tertiary amines are triethanol amine, dialkylamino ethanol, triethylene diamine, 1,4-diazabicyclo[2.2.2]octane, 1,8-diaza-bicyclo[5.4.0]undec-7-ene and 2,4,6-tris(dimethylaminomethyl)phenol. One particularly preferred accelerator is 2,4,6-tris(dimethylaminomethyl)phenol such as Ancamine K54 from Evonik.

Examples of suitable imidazoles are 2-methylimidazole, 2-phenylimidazole, 2-phenyl-4-methyl imidazole and 2-heptadecylimidazole.

Examples of suitable organic acids are benzoic acid derivatives such as salicylic acid.

Examples of suitable organic phosphines are tributyl phosphine, methyldiphenyl phosphine, triphenyl phosphine, diphenyl phosphine and phenyl phospine.

Examples of suitable phenols are alkyl phenols such as nonylphenol and Novares LS500.

A particularly preferred curing accelerator for use with epoxy-based binder, is a (meth)acrylic ester. The (meth)acrylic ester accelerator is preferably an aliphatic (meth)acrylate comprising at least two (meth)acrylate functional groups linked by an organic linker. Such a multiester may be a diester, a triester or a tetraester.

The molecular weight of the (meth)acrylic ester is preferably less than 1000.

Preferably the (meth)acrylic ester is a (meth)acrylate ester of a polyol such as a diol, or triol or a sugar based polyol such as a sugar alcohol. It is not essential for all OH groups within a polyol to carry the (meth)acrylate ester group, however there should preferably be at least two ester functionalities in the (meth)acrylic ester. Suitable polyols for functionalization include alkylene diols (e.g. hexanediol, pentanediol), saccharides (e.g. mono or disaccharides) or polyols (especially sugar alcohols) such as erythritol, sorbitol, maltitol and mannitol.

Particularly preferred (meth)acrylic esters for use as curing accelerators are of formula (I), and mixtures thereof, 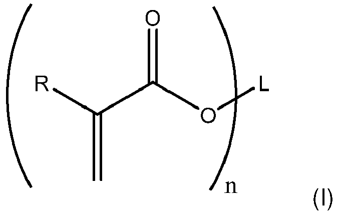 wherein
each R is H or Me;
n is 2-5;
and L represents the residue of a polyol, a saccharide or sugar alcohol, wherein at least two OH groups in the polyol carry are derivatised as shown in formula (I).

Preferably L consists only of C, H and O atoms. Preferably the molecular weight of L is less than 1000 g/mol.

### Accelerators for Polysiloxane based-binder

When the binder is a polysiloxane based-binder the coating composition of the invention preferably comprises a catalyst. Representative examples of catalysts that can be used include transition metal compounds, metal salts and organometallic complexes of various metals, such as, tin, iron, lead, barium, cobalt, zinc, antimony, cadmium, manganese, chromium, nickel, aluminium, gallium, germanium, titanium, boron, lithium, potassium, bismuth and zirconium. The salts preferably are salts of long-chain carboxylic acids and/or chelates or organometal salts.

Examples of suitable tin-based catalysts include for example dibutyltin dilaurate, dibutyltin dioctoate, dibutyltin diacetate or dioctyltin dilaurate. Examples of commercially available tin catalysts include BNT-CAT 400 and BNT-CAT 500 from BNT Chemicals, FASCAT 4202 from PMC Organometallix and Metatin Katalysator 702 from DOW.

Examples of suitable zinc catalysts are zinc 2-ethylhexanoate, zinc naphthenate and zinc stearate. Examples of commercially available zinc catalysts include K-KAT XK-672 and K-KAT670 from King Industries and Borchi Kat 22 from Borchers.

Examples of suitable bismuth catalysts are organobismuth compounds such as bismuth 2-ethylhexanoate, bismuth octanoate and bismuth neodecanoate. Examples of commercial organobismuth catalysts are Borchi Kat 24 and Borchi Kat 315 from Borchers. K-KAT XK-651 from King Industries, Reaxis C739E50 from Reaxis and TIB KAT716 from TIB Chemicals.

Examples of suitable titanium catalysts are organotitanium catalysts such titanium naphthenate, tetrabutyl titanate, tetrakis(2- ethylhexyl)titanate, triethanolamine titanate, tetra(isopropenyloxy)-titanate, titanium tetrabutanolate, titanium tetrapropanolate, titanium tetraisopropanolate and chelated titanates such as diisopropyl bis(acetylacetonyl)titanate, diisopropyl bis(ethylacetoacetonyl)titanate and diisopropoxytitanium bis(ethylacetoacetate). Examples of suitable commercially available titanium catalysts are Tyzor IBAY from Dorf Ketal and TIB KAT 517 from TIB Chemicals

Other suitable catalysts are iron catalysts such as iron stearate and iron 2-ethylhexanoate, lead catalysts such as lead octoate and lead 2-ethyloctoate cobalt catalysts such as cobalt-2-ethylhexanoate and cobalt naphthenate, manganese catalysts such as manganese 2-ethylhexanoate and zirconium catalysts such as zirconium naphthenate, tetrabutyl zirconate, tetrakis(2- ethylhexyl) zirconate, triethanolamine zirconate, tetra(isopropenyloxy)-zirconate, zirconium tetrabutanolate, zirconium tetrapropanolate and zirconium tetraisopropanolate.

Further suitable catalysts are zirconate esters.

The catalyst may also be an organic compound, such as triethylamine, guanidine, amidine, cyclic amines, tetramethylethylenediamine, 1,4-ethylenepiperazine and pentamethyldiethylenetriamine. Further examples include aminosilanes, such as 3-aminopropyltriethoxysilane and N,N-dibutylaminomethyl-triethoxysilane.

Preferably the catalyst is a tin, titanium, bismuth, guanidine and/or amidine catalyst, more preferably a bismuth, guanidine and/or amidine catalyst.

Preferably the catalyst is present in the coating composition of the invention in an amount of 0.01 to 5 wt% based on the total dry weight of the coating composition, more preferably 0.05 to 4 wt%.

### Accelerators for Polyurethane-based and Polyurea-based Binders

Catalysts are optionally used with polyurethane and polyurea-based binders to speed up the curing reaction. Examples of suitable catalysts include tetramethylbutanediamine (TMBDA), N-alkyl morpholines, triethylamine (TEA), 1,8-diazabicyclo[5.4.0]undecene-7 (DBU), pentamethyldiethylene-triamine (PMDETA), zinc octoate, dioctyltin dilaurate dibutyltin dilaurate, and dibutyltin oxide, in particular fdioctyltin dilaurate, dibutyltin dilaurate, and dibutyltin oxide.

### Accelerators for Silicate-based Binders

The curing time of an alkyl silicate-based binder may be reduced by adding an accelerator. Examples of suitable accelerators are zinc chloride, magnesium chloride, iron chloride and trimethyl borate.

### Reactive Diluent

The coating compositions of the invention preferably further comprise a reactive diluent. Reactive diluents may be used singly or in combination, e.g. in a mixture of two or more reactive diluents.

Preferably the viscosity of the reactive diluent is <100 cp, preferably <50 cP, more preferably <30 cP, and still more preferably <20 cP. Preferably the viscosity of the reactive diluent is at least 1 cP.

Preferably the epoxy equivalent weight (EEW) of the reactive diluent is 50-500, more preferably 100-400, and still more preferably 100-300.

Preferred reactive diluents for use in the coating compositions of the invention are formed from a modified epoxy compound. Examples of suitable reactive diluents include: phenyl glycidyl ether, C₁₋₁₆ alkyl glycidyl ether, C₈₋₁₀ alkyl glycidyl ester of neodecanoic acid (i.e. R¹ R²R³C-COO-Gly, where R¹, R², and R³ are C₈₋₁₀ alkyl groups and Gly is a glycidyl group), olefin epoxide, CH₃-(CH₂)ₙ-Gly, wherein n is 11 to 13 and Gly is a glycidyl group, 1,4-butanediol diglycidyl ether (i.e. Gly-O-(CH₂)₄-O-Gly), 1,6-hexanediol diglycidyl ether (i.e. Gly-O-(CH₂)₆-O-Gly), neopentyl glycol diglycidyl ether (i.e. Gly-O-CH₂-C(CH₃)₂-CH₂-O-Gly), trimethylolpropane triglycidyl ether (i.e. CH₃-CH₂-C(CH₂-O-Gly)₃), C₁₋₂₀-alkylphenyl glycidyl ether (preferably C₁₋₅ alkylphenylglycidyl ether, e.g. methylphenyl glycidyl ether, ethylphenyl glycidyl ether, propylphenyl glycidyl ether and para tertiary butyl phenyl glycidyl ether (p-TBPGE)), and reaction products of epichlorohydrin and an oil obtained from the shells of cashew nuts.

A preferred reactive diluent is the reaction product of epichlorohydrin and an oil obtained from the shells of cashew nuts. An example of a commericially available reactive diluent of this type is Cardolite NC-513 from Cardolite.

Another preferred class of reactive diluents are aliphatic reactive diluents. The aliphatic reactive diluents are preferably formed from the reaction of a compound comprising at least one aliphatic epoxide functionality with an aliphatic alcohol or polyol, such as 1,6-hexanediol diglycidyl ether or 1,4-butanediol diglycidyl ether. Aliphatic glycidyl ethers of chain length 8 to 14 are also preferred. Aliphatic reactive diluents may contribute to the flexibility of the coating film.

The coating compositions of the present invention preferably comprise 0-30 wt%, more preferably 0.5-30 wt%, still more preferably 1.0-25 wt% and yet more preferably 2-20 wt% reactive diluent, based on the total weight of the coating composition. The coating compositions of the present invention preferably comprise 0-30 wt%, more preferably 0.5-30 wt%, still more preferably 1.0-25 wt% and yet more preferably 2-20 wt% reactive diluent, based on the weight of the dry coating. The presence of reactive diluent in the coating compositions of the present invention reduces the viscosity of the coating composition and facilitates preparation of a high solids, solvent free, coating composition.

The total amount of binder, e.g. epoxy-based binder, curing agent(s), accelerator and reactive diluent is preferably 10 to 85 wt%, more preferably 15 to 75 wt% and still more preferably 15 to 65 wt%, based on the total weight of the coating composition.

### Zinc Flakes

The coating composition of the present invention comprises zinc flakes. The purpose of the zinc flakes is, in combination, with any other form of zinc present, to provide corrosion resistance.

Preferred zinc flakes present in the coating compositions comprise at least 90 wt% zinc, such as at least 95 wt%, more preferably at least 97 wt%. The upper limit for the amount of zinc is 100 wt%.

The physical form of the zinc flakes is an important part of the present invention. Zinc particles exist in different forms: dust, powder, flakes, needles, fibres and rods. In the coating compositions of the present invention, zinc flakes are present. Zinc flakes are lamellar or plate-like in structure. Zinc flakes are typically produced from zinc dust by ball milling in non-reactive fluid such as a hydrocarbon. The milling results in each dust particle being flattened into flake form.

Zinc flakes differ from other forms of zinc, including zinc dust and zinc powder, in its aspect ratio and density. Preferred zinc flakes have an aspect ratio of 5:1 to 60:1, more preferably 10:1 to 50:1 and still more preferably 20:1 to 40:1.

Preferably the zinc flakes are substantially planar. Preferred zinc flakes have a thickness of 0.1 to 5 µm, more preferably 0.2-2 µm and still more preferably 0.3-1 µm.

Preferred zinc flakes have a particle size D₅₀, of 1 to 100 microns, more preferably 6 to 50 microns and still more preferably 10 to 25 microns as measured by laser diffraction with a Malvern Mastersizer (ISO 13320-1). The particle sizes of zinc flakes referred to herein are the size of the flakes when they are added to the composition and prior to any extrusion or milling process.

Preferred zinc flakes, have a bulk density below 2.0, more preferably 0.5 to 2.5 and more preferably 0.7 to 1.5 g/cm³.

Zinc flakes that are suitable for use in the compositions of the present invention are commercially available from Eckart under the tradename STANDART® Zinc Flake and ProFLAKE.

The amount of zinc flakes present in the coating composition of the invention is preferably 1-40 wt%, more preferably 2-30 wt% and still more preferably 3-20 wt%, based on the total weight of the compositions. The amount of zinc flakes present in the coating composition of the invention is preferably 1-50 wt%, more preferably 2-40 wt% and still more preferably 3-30 wt%, based on the weight of the dry coating.

### Zinc Dust, Zinc powder and Total Zinc

Some preferred coating compositions of the present invention do not comprise zinc powder. In other words, some preferred compositions are substantially free of, e.g. free of, zinc powder.

Some preferred coating compositions of the present invention do not comprise zinc dust. In other words, some preferred compositions are substantially free of, e.g. free of, zinc dust.

Other preferred coating compositions of the present invention do not comprise zinc dust or zinc powder. Zinc dust and zinc powder are both different from zinc flakes in that they are substantially spherical in shape.

Preferably, however, the coating composition of the present invention further comprises zinc dust. Preferably the coating composition of the invention does not comprise zinc powder.

Preferred zinc dust present in the coating compositions comprises at least 90 wt% zinc, such as at least 95 wt%, more preferably at least 97 wt%, and still more preferably at least 98 wt% zinc. The upper limit for the amount of zinc maybe 100 wt%.

As stated above, zinc dust is substantially spherical. In preferred coating compositions of the present invention the zinc dust has an particle size D₅₀ of 1-20 µm, more preferably 2-10 µm and still more preferably 3-7 µm, as measured by a Fisher sub sieve sizer, ASTM B3330-07. Preferred zinc dust has a particle size D₉₉ of 10 to 40 microns, more preferably 15 to 30 microns and still more preferably 20 to 25 microns as measured by laser diffraction. The particle sizes of zinc dust referred to herein are the size of the particles when they are added to the composition and prior to any extrusion or milling process.

Preferred zinc dust has a bulk density of 1 to 3 g/cm³ and more preferably 2 to 2.3 g/cm³.

Zinc dust for use in the coating compositions of the present invention is commercially available. For example, it is available from Everzinc, Purity Zinc Metals, Umicore and others.

The amount of zinc dust present in the coating composition of the invention is preferably 0-80 wt%, more preferably 2-60 wt% and still more preferably 5-30 wt%, based on the total weight of the compositions. The amount of zinc dust present in the coating composition of the invention is preferably 0-85 wt%, more preferably 5-65 wt% and still more preferably 8-30 wt%, based on the weight of the dry coating.

In preferred coating compositions of the present invention, the weight ratio of zinc flakes to zinc dust in said composition is 1:10 to 5:1, more preferably 1:5 to 3:1 and still more preferably 1:3 to 2:1.

In other preferred coating compositions of the present invention, the weight ratio of binder to the total amount of zinc in said composition is 10:1 to 0.1:1, more preferably 5:1 to 0.2:1 and still more preferably 1:1 to 0.3:1.

In preferred coating compositions of the present invention, the total amount of zinc is 20-80 wt%, more preferably 20-60 wt% and still more preferably 20-40 wt%, based on the total weight of the composition. In preferred coating compositions of the present invention, the total amount of zinc is 20-85 wt%, more preferably 20-50 wt% and still more preferably 30-40 wt%, based on the weight of the dry coating.

### Glass Flakes

The coating composition of the present invention comprises glass flakes. The purpose of the glass flakes is to provide a barrier effect and thus, in combination with the zinc flakes, to provide corrosion resistance.

The physical form of the glass flakes is an important part of the invention. Glass particles exist in different forms, most commonly particles, spheres, flakes, needles and fibres. Glass flakes are lamellar or plate-like in structure. It is believed that this plate-like structure is critical to providing the improved corrosion resistance observed.

Preferred coating compositions of the present invention do not comprise glass spheres. Particularly preferred coating compositions of the present invention only comprise glass in the form of glass flakes, i.e. they do not contain glass in the form of particles, spheres, needles or fibres.

Glass flakes are different from other forms of glass, including glass spheres, in their aspect ratio, size distribution and density.

Glass flakes are much thinner than they are wide. Preferably the glass flakes are substantially planar. Preferred glass flakes have a thickness of 0.1 to 15 µm, more preferably 0.5-10 µm and still more preferably 1-8 µm.

Preferred glass flakes have a particle size D₈₈, of 1 to 100 microns, more preferably 10 to 70 microns and still more preferably 20 to 50 microns as measured by laser diffraction. Preferred glass flakes have a maximum particle size of 200 to 500 microns, and more preferably 250 to 400 microns as measured by laser diffraction. The particle sizes of glass flakes referred to herein are the size of the flakes when they are added to the composition and prior to any extrusion or milling process.

Preferred glass flakes, have a bulk density of 1 to 5 g/cm³ and more preferably 2 to 3 g/cm³.

Glass flakes that are suitable for use in the compositions of the present invention are commercially available from Nippon Sheet Glass and Glassflake Ltd.

Optionally the glass flakes used in the compositions of the present invention are coated. Examples of suitable coatings include silanes, such as aminosilanes and epoxysilanes.

The amount of glass flakes present in the coating composition of the invention is preferably 1-45 wt%, more preferably 5-40 wt% and still more preferably 7-35 wt%, based on the total weight of the compositions. The amount of glass flakes present in the coating composition of the invention is preferably 1-60 wt%, more preferably 5-50 wt% and still more preferably 7-45 wt%, based on the weight of the dry coating.

In preferred coating compositions of the present invention, the weight ratio of zinc flakes to glass flakes in said composition is 1:4 to 4:1, more preferably 1:3 to 2:1 and still more preferably 1:2 to 2:1.

In other preferred coating compositions of the present invention, the weight ratio of the total amount of zinc to glass flakes in said composition is 4:1 to 1:4, more preferably 3:1 to 1:3 and still more preferably 2:1 to 2:3.

### Conductive Pigment

The composition of the present invention preferably further comprises a conductive pigment (other than zinc). Zinc is of course a conductive pigment and provides the primary mechanism by which current is transferred. The presence of an additional conductive pigment tends to improve the conductivity of the coating.

Preferably the conductive pigment (other than zinc) is selected from graphite, graphene, carbon black, aluminium pigments, black iron oxide, antimony-doped tin oxide, indium tin oxide, mica coated with antimony-doped tin oxide, carbon nanotubes, carbon fibres, and mixtures thereof. In further preferred coating compositions of the present invention, the conductive pigment is selected from carbon nanotubes, carbon fibres or a mixture thereof.

Carbon nanotubes for use in the compositions of the present invention may be single-walled or multi-walled, but are preferably single-walled. Preferred carbon nanotubes have an average diameter of 1-4 nm, more preferably 1-3 nm and still more preferably 1-2 nm. Preferred carbon nanotubes have an average length of 1-10 µm, more preferably 2-8 µm and still more preferably 4-6 µm.

Suitable carbon nanotubes for use in the coating compositions of the present invention are available from OCSiAl

Carbon fibre for use in the compositions of the present invention preferably has an average diameter of 1-10 µm, more preferably 2-8 µm, and still more preferably 4-6 µm. Preferred carbon fibre has an average length of 1-100 µm, more preferably 20-80 µm and still more preferably 40-60 µm.

Suitable carbon fibre for use in the compositions of the present invention is commercially available, e.g. from Teijin Carbon.

The amount of conductive pigment (other than zinc) present in the coating composition of the invention is preferably 0.001-6 wt%, more preferably 0.01-4 wt% and still more preferably 0.01-2 wt%, based on the total weight of the compositions. The amount of conductive pigment (other than zinc) present in the coating composition of the invention is preferably 0.001-7 wt%, more preferably 0.01-5 wt% and still more preferably 0.01-3 wt%, based on the weight of the dry coating.

The amount of carbon nantotubes and/or carbon fibres present in the coating composition of the invention is preferably 0.001-5 wt%, more preferably 0.01-3 wt% and still more preferably 0.01-1 wt%, based on the total weight of the compositions. The amount of carbon nantotubes and/or carbon fibres present in the coating composition of the invention is preferably 0.001-6 wt%, more preferably 0.01-4 wt% and still more preferably 0.01-2 wt%, based on the weight of the dry coating.

### Rheology Modifier

The coating compositions of the present invention optionally comprise a rheology modifier. The presence of a rheology modifier may be beneficial for improving the storage stability, and/or the application properties, of the composition.

Any conventional rheology modifier may be used. For example, organic rheology modifiers and/or inorganic rheology modifiers may be used. A single rheology modifier may be used or a combination thereof.

Representative examples of suitable organic rheology modifiers for use in the compositions of the invention include amide waxes, and castor oil derivatives.

Representative examples of suitable inorganic rheology modifiers for use in the compositions of the invention include fine powdered silica, bentonite, a surface treated silia, e.g. silane-treated silica, surface-treated bentonite, e.g. organically modified bentonite, surface-treated calcium carbonate, and mixtures thereof.

The amount of rheology modifiers present in the coating composition of the invention is preferably 0-5 wt%, more preferably 0.1-3 wt% and still more preferably 0.2-2 wt%, based on the total weight of the compositions. The amount of rheology modifiers present in the coating composition of the invention is preferably 0-6 wt%, more preferably 0.1-4 wt% and still more preferably 0.1-3 wt%, based on the weight of the dry coating.

### Barrier Pigments

The coating composition of the present invention optionally comprises one or more barrier pigments (other than glass flakes).

Some barrier pigments are lamellar or flake like. Such pigments tend to align and form a wall of flat, thin particles and elements in the environment, e.g. water and moisture, can only reach the underlying metal surface by following a path around the wall. Alternatively, the barrier pigments may be spherical. These pigments form a close packed "protective" wall and, e.g. water, must follow a tortuous path through the wall to reach the metal surface.

Any conventional barrier pigments may be used. Representative examples include mica, micaceous iron oxide, metal flakes (e.g. aluminium flake, steel flake), ceramic microspheres, talc, and mixtures thereof. Suitable barrier pigments for use in the coating composition of the invention are commercially available.

The amount of barrier pigment (excluding glass flakes) present in the coating composition of the invention is preferably 0-70 wt%, more preferably 1-55 wt% and still more preferably 2-30 wt%, based on the total weight of the compositions. The amount of barrier pigment (excluding glass flakes) present in the coating composition of the invention is preferably 0-80 wt%, more preferably 1-60 wt% and still more preferably 2-35 wt%, based on the weight of the dry coating.

### Silane

The coating composition of the present invention optionally further comprises a silane. Silanes may improve the drying properties of the composition, particularly at low temperature, flexibility, adhesion to substrates and anti-corrosive performance. Preferably, the silane contains an epoxy group. Preferred silanes for use in the invention have a low Mw, such as less than 400 g/mol.

Preferred silanes for use in the coating composition of the present invention are of general formula (II) or (III):

(II) Y-R_{(4-z)}SiX_{z}

(III) Y-R_{(3-y)}R¹SiX_{y}

wherein
z is an integer from 1 to 3;
y is an integer from 1 to 2;
R is a hydrocarbyl group having 1 to 12 C atoms, optionally containing an ether or amino linker;
R¹ is a hydrocarbyl group having 1 to 12 C atoms; Y is a functional group bound to R that can react with the binder, e.g. epoxy-based binder, and/or the curing agent; and
each X independently represents a halogen group or an alkoxy group.

In preferred compounds of formula (II) and (III) Y is a isocyanate, epoxy, amino, hydroxy, carboxy, acrylate, or methacrylate group. The Y group may bind to any part of the chain R. It will be appreciated that where Y represents an epoxy group then R will possess at least two carbon atoms to allow formation of the epoxide ring system.

In further preferred compounds of formula (II) and (III), Y is an amino group or epoxy group. The amino groups are preferably NH₂. Preferably Y is an epoxy group. If the Y group is an amino group that can react with the epoxy-based binder, it is preferred if the silane is provided separately from the epoxy-based binder together with the curing agent. In general, in the kit of the invention, the silane should not react with any ingredient of the component of the kit in which the silane is present.

In preferred compounds of formula (II) or (III), R is preferably a hydrocarbyl group having up to 12 carbon atoms. By hydrocarbyl is meant a group comprising C and H atoms only. It may comprise an alkylene chain or a combination of an alkylene chain and rings such as phenyl or cyclohexyl rings. The term "optionally containing an ether or amino linker" implies that the carbon chain can be interrupted by a -O- or -NH- group in the chain, e.g. to form a silane such as [3-(2,3-Epoxypropoxy)propyl]trimethoxysilane: H₂COCHCH₂OCH₂CH₂CH₂Si(OCH₃)₃.

It is preferred if the group Y does not bind to a carbon atom which is bound to such a linker -O- or -NH-.

R is preferably an unsubstituted (other than Y obviously), unbranched alkyl chain having 2 to 8 C atoms.

In preferred compounds of formula (II) and (III), X is an alkoxy group, such as a C₁₋₆ alkoxy group, especially preferably a methoxy or ethoxy group. It is also especially preferred if there are two or three alkoxy groups present. Thus in compounds in formula (II) z is preferably 2 or 3, especially 3. In compounds of formula (III), y is preferably 2.

In preferred compounds of formula (III), R¹ is preferably C₁₋₄ alkyl such as methyl.

A particularly preferred silane present in the coating compositions of the present invention is of formula (IV):

(IV) Y'-R'(_{4-z})SiX'_{z}

wherein
z is an integer from 2 to 3;
R' is a unsubstituted, unbranched alkyl chain having 2 to 8 C atoms, optionally containing an ether or amino linker;
Y' is an amino or epoxy functional group bound to the R' group; and
X' represents an alkoxy group.

Examples of suitable silanes for use in the coating compositions of the present invention include: products manufactured by Evonik and marketed under the brand name of Dynasylan®D, the Silquest® silanes manufactured by Momentive and the GENIOSIL® silanes manufactured by Wacker.

Specific examples include methacryloxypropyltrimethoxysilane (Dynasylan MEMO, Silquest A-174NT), 3-mercaptopropyltri(m)ethoxysilane (Dynasylan MTMO or 3201; Silquest A-189), 3-glycidoxypropyltrimethoxysilane (Dynasylan GLYMO, Silquest A- 187), tris(3-trimethoxysilylpropyl) isocyanurate (Silquest Y-11597), gamma-mercaptopropyltrimethoxysilane (Silquest A-189), beta-(3,4-epoxycyclohexyl)ethyltrimethoxysilane (Silquest A-186), gamma-isocyanatopropyltrimethoxysilane (Silquest A-Link 35, Genosil GF40), (methacryloxymethyl)trimethoxysilane (Genosil XL 33), isocyanatomethyl)trimethoxysilane (Genosil XL 43), aminopropyltrimethoxysilane (Dynasylan AMMO; Silquest A-I 110), aminopropyltriethoxysilane (Dynasylan AMEO) or N-(2-aminoethyl)-3-aminopropyltrimethoxysilane (Dynasylan DAMO, Silquest A-I 120) or N-(2-aminoethyl)-3-aminopropyltriethoxysilane, triamino- functional trimethoxysilane (Silquest A- 1130), bis(gamma- trimethoxysilylpropyl)amine (Silquest A-I 170), N-ethyl-gamma- aminoisobytyltrimethoxy silane (Silquest A-Link 15), N-phenyl-gamma-aminopropyltrimethoxysilane (Silquest Y-9669), 4-amino-3,3-dimethylbutyltrimethoxysilane (Silquest Y-I 1637), (N-cyclohexylaminomethyl)triethoxysilane (Genosil XL 926), (N-phenylaminomethyl)trimethoxysilane (Genosil XL 973), Deolink Epoxy TE and Deolink Amino TE (D.O.G Deutsche Oelfabrik) and mixtures thereof.

Other preferred silanes include 3-Aminopropyltriethoxysilane, 3-aminopropyltrimethoxysilane, N-(Aminoethyl)-aminopropyltrimethoxysilane (H₂NCH₂CH₂NHCH₂CH₂CH₂Si(OCH₃)₃), 3-aminopropylmethyldiethoxysilane, 3-(2-aminoethylamino)propylmethyldimethoxysilane, (H₂NCH₂CH₂NHCH₂CH₂CH₂SiCH₃(OCH₃)₂), [3-(2,3-Epoxypropoxy)propyl]triethoxysilane (H₂COCHCH₂OCH₂ CH₂CH₂Si(OCH₂CH₃)₃, [3-(2,3-Epoxypropoxy)propyl]trimethoxysilane (H₂COCHCH₂OCH₂CH₂CH₂ Si(OCH₃)₃).

3-glycidoxypropyltrimethoxysilane is especially preferred. A mixture of silanes might also be used.

The amount of silane present in the coating composition of the present invention is preferably 0 to 15 wt%, more preferably 0.1-15 wt%, still more preferably 0.2-10 wt% and yet more preferably 0.5 to 10 wt%, based on the total weight of the coating composition.

The amount of silane present in the coating composition of the present invention is preferably 0 to 20 wt%, more preferably 0.1-20 wt%, still more preferably 0.2-15 wt% and yet more preferably 0.5 to 10 wt%, based on the weight of the dry coating.

### Additives

The coating composition of the invention optionally comprises a wide variety of additives. Examples of additives that are optionally present in the composition of the invention include co-binder, hydrocarbon resin, solvent, moisture scavenger, colour pigment, defoaming agent, dispersing agent, additional anticorrosive pigments, e.g. zinc phosphate, anti-settling agent, fillers, drying agents, waxes, and surface modifying agents.

Additional additives are preferably present in an amount of 0 to 20 wt%, more preferably 0.1-10 wt%, still more preferably 0.1 to 5 wt% and particularly preferably 0.5 to 5 wt%, based on the total weight of the coating composition.

The coating composition of the present invention optionally comprises a co-binder. Examples of suitable co-binders include saturated polyester resins, polyvinylacetate, polyvinylbutyrate, copolymers of vinyl acetate, vinyl isobutyl ether, copolymers of vinyl chloride and vinyl isobutyl ether, styrene co-polymers such as styrene/butadiene co-polymers, acrylic resins, hydroxy-acrylate copolymers, fatty acids and cyclized rubbers.

The coating composition of the present invention preferably comprises 0-10 wt% co-binder, based on the total weight of the composition.

The coating composition of the invention optionally comprises a hydrocarbon resin. A wide range of hydrocarbon resins are suitable for including in the coating composition. Preferably the hydrocarbon resin is a petroleum resin.

Examples of petroleum resins suitable in the present invention include an aromatic petroleum resin obtained by polymerizing a Cg fraction (e.g. styrene derivatives such as alpha methylstyrene, o, m, p-cresol, indene, methyl indene, cumene, napthalene or vinyltoluene) obtained from a heavy oil that is produced as a by-product by naphtha cracking, an aliphatic petroleum resin obtained by polymerizing a C₅ fraction such as 1,3-pentadiene or isoprene, 2-methyl-2-butene, cyclopentadiene, dicyclopentadiene or cyclopentene. Also employable in the invention are a copolymer-based petroleum resin obtained by copolymerizing the C₉ fraction and the C₅ fraction, an aliphatic petroleum resin wherein a part of a conjugated diene of the C₅ fraction such as cyclopentadiene or 1,3-pentadiene is cyclic-polymerized, a resin obtained by hydrogenating the aromatic petroleum resin, and an alicyclic petroleum resin obtained by polymerizing dicyclopentadiene. Mixtures of diaryl and triaryl compounds obtained from reaction of C₉ blends under catalytic conditions are also possible to utilize.

The coating composition of the present invention preferably comprises 0-10 wt%, hydrocarbon resin, based on the total weight of the composition.

### Coating system

The present invention preferably provides a composition which is a zinc primer. Zinc primers are used for galvanic corrosion protection of steel structures such as bridges, infrastructure, buildings, platforms and power plants. The zinc primer works as the sacrificial anode in the galvanic system and thus relies on direct contact with the steel. Thus, preferably the zinc primer is the first layer in a coating system.

A coating system for galvanic corrosion protection preferably comprises, e.g. consists of, three layers: a zinc primer layer, a mid-coat layer and a top-coat layer. The mid-coat layer is preferably epoxy based. The top-coat layer is preferably polyurethane or polysiloxane based. Together, the coatings in the system provide both galvanic protection and barrier protection to the steel substrate.

### Compositions

Preferred coating compositions of the present invention comprise:
(i) a binder, preferably an organic binder and more preferably an epoxy-based binder;
(ii) glass flakes;
(iii) zinc flakes; and
(iv) optionally zinc dust.

In such compositions, the weight ratio of zinc flake to zinc dust is preferably 1:4 to 3:1, and more preferably 1:3 to 2:1.

In such compositions, the weight ratio of zinc flake to glass flake is preferably 4:1 to 1:4, and more preferably 2:1 to 1:2.

Further preferred coating compositions of the present invention comprise:
(i) an epoxy-based binder;
(ii) a curing agent;
(iii) glass flakes;
(iv) zinc flakes; and
(v) optionally zinc dust.

In such compositions the weight ratio of zinc flake to zinc dust is preferably 1:4 to 3:1, and more preferably 1:3 to 2:1.

In such compositions, the weight ratio of zinc flake to glass flake is preferably 4:1 to 1:4, and more preferably 2:1 to 1:2.

Yet further preferred coating compositions of the present invention comprise:
(i) 1-70 wt%, preferably 5-60 wt% binder, more preferably 10-50 wt%, preferably an organic binder and more preferably an epoxy-based binder;
(ii) 1-45 wt%, preferably 7-35 wt% glass flakes;
(iii) 1-40 wt%, preferably 3-20 wt% zinc flakes; and
(iv) 0-80 wt%, preferably 5-30 wt% zinc dust,
wherein the total amount of zinc is 20-80 wt%, based on the total weight of the composition.

A yet further preferred coating composition of the present invention comprises:
(i) 1-70 wt%, preferably 5-60 wt%, more preferably 10-45 wt% epoxy-based binder;
(ii) 0.1-30 wt%, preferably 0.5-15 wt% curing agent;
(iii) 1-45 wt%, preferably 7-35 wt% glass flakes;
(iv) 1-40 wt%, preferably 3-20 wt% zinc flakes; and
(v) 0-80 wt%, preferably 5-30 wt% zinc dust,
wherein the total amount of zinc is 20-80 wt%, based on the total weight of the composition.

Preferred coating compositions of the invention have a solids content of least 40 wt%, more preferably 45 to 100 wt% and still more preferably 50-100 wt%. This means the coating composition minimises the amount of VOCs. Preferred coating compositions of the invention have a VOC content of 0-450 g/L and more preferably 0-400 g/L.

Preferred coating compositions of the invention are sprayable.

### Containers and kits

The present invention also relates to a container containing a coating composition as hereinbefore described. Suitable containers include cardboard boxes lined with a plastic bag and plastic bags (so called "big bags").

Alternatively, the coating composition of the present invention may be provided in the form of a kit. In a kit the curing agent is preferably present in a separate container to the binder. Kits therefore comprise:
(i) a first container containing a binder, and optionally glass flakes, zinc flakes, and zinc dust;
(ii) a second container containing curing agent and/or zinc flakes and/or zinc dust, and optionally glass flakes;
wherein each of glass flakes and zinc flakes are present in at least one of said containers.

In preferred kits of the invention, the glass flakes are present in the first container. In further preferred kits of the invention, the zinc flakes are present in the first container. Optionally the kits comprise conductive pigment and/or barrier pigment. When present conductive pigment is preferably present in the first container. When present barrier pigment is preferably present in the first container. Optionally the kits comprise a rheology modifier. Optionally the kits comprise zinc dust. When present, zinc dust is preferably present in the second container. When present, the rheology modifier is preferably present in the first container. Optionally the kits comprise a silane. When present silane is preferably present in the first container.

### Manufacture

The present invention also relates to a process for preparing a coating composition as hereinbefore described comprising mixing:
(i) a binder;
(ii) glass flakes;
(iii) zinc flakes; and
(iv) optionally zinc dust.

In a preferred method of the invention, the binder and glass flakes are premixed and ground and separately the curing agent and, if present, accelerator are mixed. Preferably zinc flakes are added to the binder and glass flakes mixture after grinding is complete. Preferably the two resulting mixtures are combined (e.g. immediately prior to use) and mixed,

When present, the reactive diluent is preferably premixed with the binder. When present, the silane is preferably premixed with the binder. When present, the conductive pigment is preferably premixed with the binder. When present the barrier pigment is preferably premixed with the binder. When present the rheology modifier is preferably premixed with each of the binder and the curing agent.

Any conventional mixing equipment may be used.

### Application to surfaces

The present invention also relates to a method of coating a surface, wherein said method comprises:
(i) applying a composition as hereinbefore described; and
(ii) curing said composition to form a coating on the surface.

Optionally the surface is pre-treated prior to application of the coating composition of the invention. Preferably, the coating composition is applied directly to the surface. This means the coating composition, comprising zinc, is directly in contact with the surface.

The coating composition of the present invention may be part of a coating system. In a preferred coating system, the coating composition of the invention is applied directly to the surface and then another coating, e.g. an epoxy coating, is applied thereto.

The coating composition of the invention may be applied to a substrate by any conventional coating method, e.g. spraying, rolling, dipping etc. Preferably the coating composition is applied by spraying, and more preferably by airless spraying. Spraying is preferred as it enables large surface areas to be coated in a uniform manner. Additionally spraying can be used to coat non-horizontal surfaces.

Preferably the substrate is metal, in particular steel.

The present invention also relates to a coating comprising a coating composition as hereinbefore described. Optionally the coating is applied in a number of steps, wherein a first layer of the coating is applied, dried and cured, then a subsequent layer of coating is applied. Preferred coatings have a dry thickness of 40-90 µm, and more preferably 50 to 85 µm.

The coating composition of the present invention may be used to form a single layer coating or a multilayer coating (i.e. a coating system). In the case of a multilayer coating the coating composition of the present invention is preferably used to form a first layer on the substrate, e.g. metal surface. Preferably a second coat is applied.

### Curing

Preferably the coating of the present invention is cured. Thus, once a substrate (e.g. a metal substrate) is coated with the coating composition of the invention, the coating is preferably cured. Preferably the coating of the present invention cures in the temperature range -5-50 °C. Preferably therefore the coating of the present invention does not require heat to cause curing. Preferably the curing time (i.e. time to achieve surface dryness by the thumb-test) is 0.5-10 hr, more preferably 1-5 hr.

### Coatings and Articles

The present invention also relates to a substrate coated with a coating composition as hereinbefore described or a coating as hereinbefore described. The coating composition of the invention may be applied to any substrate. Representative examples of substrates include metal substrate and, in particular, steel, galvanized steel, aluminium, and copper. Particularly preferably the substrate is steel.

The coatings of the present invention provide anti-corrosion coatings on such substrates. The types of metal substrates that are preferably coated with coatings of the present invention are therefore those which are in contact with corrosive environments. Examples of metal substrates include bridges, oil rigs, steel infrastructure, pipes, valves, tanks, containers, ship parts, etc. A particularly preferred substrate is a bridge, oil rig or steel infrastructure.

The substrate may be partially, or completely coated, with the coating composition or coating of the invention. Preferably, however, all of the substrate (e.g. all of the external walls) is coated with the coating composition or coating of the invention.

### Uses

The present invention also provides the use of a composition as hereinbefore described to form a coating, preferably an anti-corrosive coating, on at least one surface of an article. Preferably the surface is a metal surface as hereinbefore described.

The invention will now be described with reference to the following non-limiting examples.

### EXAMPLES

### Materials

The polymers and compounds used in the examples were all available commercially. The polymers and compounds used are summarised in the table below.

| Compound | Function |
|---|---|
| Bisphenol A epoxy EEW 450-530 g/eq and viscosity 7500-12000 mPas. | Organic binder |
| Reactive diluent, EEW 275-300 g/eq. | Binder system |
| Curing agent A (polyamide), AHEW 246-254 g/eq, viscosity 700-1000 mPas, polyamide | Binder system |
| Curing agent B (polyamide), AHEW 257-343 g/eq, viscosity 800-1500 mPas | Binder system |
| Accelerator, Amine value 48-54 mg KOH/g | Binder system |
| Glass flakes, average thickness 3-7 µm, average size 15 µm, size distribution: 88% below 45 µm, density 2.50 g/cm³ (Microglas Glasflake RCF-015 from Nippon sheet glass) | Barrier pigment |
| Zinc flake A, particle size D₅₀ 18-22 µm, density 7.10 g/cm³ (STANDART Zinc flake AT from Eckhart) | Anti-corrosive pigment |
| Zinc flake B, particle size D₅₀ 12-15 µm, density 7.10 g/cm³ (STANDART Zinc flake GTT from Eckhart) | Anti-corrosive pigment |
| Zinc dust, average particle size 3.7- 4.5 µm, density 7.10 g/cm³ | Anti-corrosive pigment |
| Carbon fibre, average particle length 60 µm (Teijin carbon) | Conductive pigment |
| Carbon nanotubes (Tuball from OCSIAI) | Conductive pigment |
| n-Butanol | Solvent |
| Xylene | Solvent |
| Zinc phosphate, particle size < 45 µm | Anti-corrosive pigment |
| micaeous iron oxide | Anti-corrosive pigment |
| Nanosized clay | Rheology modifier |
| Fumed silica | Rheology modifier |
| Amide wax | Rheology modifier |
| Talc | Barrier pigment |
| Clay | Barrier pigment |
| Aluminum paste | Barrier pigment |
| Crystalline aluminosilicate | Moisture scavenger |
| Hollow ceramic spheres | Filler |
| Glass bubbles from 3M | Filler |

### Preparation of coating compositions

Example compositions were prepared by a conventional technique for paint production.

The paint compositions were prepared as a two-component mixture, specifically the pre-mixture comprising the binder and a second pre-mixture comprising the curing agent. The raw materials for each pre-mixture were mixed together using a high-speed dissolver. The liquid components, i.e. binder, solvents and additives, were pre-mixed before addition of the solid components. The solid components were mixed together and grinded with the exception of the zinc flakes and glass spheres. The zinc flakes and glass spheres were stirred into the mixture at low mixing speed, after the grinding had taken place. The glass flakes were grinded together with the other solid components. The two pre-mixtures were mixed at the point of use. The compositions are summarised in Tables 1 and 2 below, wherein the amounts of ingredients are specified in wt% unless otherwise specified. All wt% specified herein are based on the total mixed composition, unless otherwise specified.

CE1, comparative example 1, exemplifies a standard Zn dust-containing composition. It does not contain zinc flakes or glass flakes as required by the present invention.

CE2, comparative example 2, exemplifies a composition containing glass bubbles, as described in WO2014/032844, instead of glass flake as required by the present invention.

### Preparation of samples for testing

Steel panels with dimension 7.5 x 15 x 3 mm were coated with one 75 µm layer of the composition to be tested. The steel panels were cold rolled mild steel, abrasive blasted to Sa 2½ (ISO 8501-1). After application, the composition was cured at 23 °C and 50 % relative humidity for 7 days. Before exposure to salt spray, a horizontal 2 mm wide scribe is cut through the coating, down to the steel substrate with a circular saw. This is in order to be able to evaluate rust-creep after salt spray exposure.

### Test methods

### • Salt spray test - ISO 9227, neutral salt spray

The salt spray test was performed according to the above standard methodology in order to evaluate a coatings corrosion resistance. The test artificially reproduces a condition that occurs in an environment with salt spray. The salt spray is made from a 5 % solution of NaCl. The temperature is constantly at 35 °C.

After 1000 hours exposure, the rust development is evaluated according to ISO 4628-3. The degree of rusting, Ri, is assessed by comparing to pictorial standards. A value between 0 and 5 is given depending on the percentage of rusted area, e.g. Ri 3 corresponds to 1 % rusted area. The rust creep around the scribe is evaluated according to ISO 4628-8. The coating around the scribe is removed, in this case physically, and the width of the rust creep is measured at nine points. The rust creep value RC is obtained from the equation RC = (A - W)/2, where A is the average of the nine measurements in millimetres and W is the width of the scribe (2 mm).

The results are shown in Table 3 below.

**Table 1**

| | CE1 | CE 2 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Bisphenol A epoxy | 10.9 | 15.3 | 11.5 | 11.5 | 11.5 | 10.9 | 10.9 | 11.3 | 14.3 | 12.2 | 11.5 |
| Reactive diluent | - | - | - | - | - | 5.0 | - | - | - | - | - |
| Curing agent A | | 8.1 | 6.2 | 6.2 | 6.2 | | | | | | 6.2 |
| Curing agent B | 4.2 | - | - | - | - | 4.2 | 4.2 | 4.2 | 5.5 | 4.27 | - |
| Glass flake | - | - | 27.9 | 27.9 | 27.9 | 20.0 | 20.0 | 15.9 | 21.5 | 28.6 | 26.6 |
| Glass bubbles | - | 5.1 | - | - | - | - | - | - | - | - | - |
| Zinc flake, 18-22 µm | - | 17.5 | 13.3 | 13.3 | - | 10.1 | 10.1 | 18.8 | 14.6 | 10.4 | 13.3 |
| Zinc flake, 12-15 µm | - | - | - | - | 13.3 | - | - | - | - | - | - |
| Zinc dust | 36.2 | 9.6 | 7.3 | 7.3 | 7.3 | 26.5 | 26.5 | 18.8 | 9.1 | 10.4 | 7.3 |
| Carbon nanotubes | - | 0.1 | 0.1 | | 0.1 | - | - | | 0.1 | 0.1 | 0.1 |
| Carbon fiber | - | - | - | - | - | 1.0 | 1.0 | 1.0 | - | - | - |
| Xylene | 20.1 | 28.0 | 21.3 | 21.3 | 21.3 | 15.4 | 20.4 | 20.9 | 22.0 | 20.8 | 21.3 |
| N-butanol | 5 | 6.4 | 4.9 | 4.9 | 4.9 | 5.5 | 5.5 | 5.2 | 5.1 | 5.1 | 4.9 |
| Wetting and dispersing agent | - | 1.2 | 0.9 | 0.9 | 0.9 | - | - | - | - | - | 0.9 |
| Zinc phosphate | - | 1.9 | 1.4 | 1.4 | 1.4 | - | - | 1.5 | 1.5 | 2.5 | 1.4 |
| Micaeous iron oxide | - | 5.9 | 4.5 | 4.5 | 4.5 | - | - | - | - | 4.9 | 4.5 |
| Talc, clay and aluminium paste | 22.3 | - | - | - | - | - | - | - | - | - | - |
| Nanosized clay | - | - | - | - | - | | - | 1.7 | - | - | 1.3 |
| Fumed silica | 0.6 | - | - | - | | 0.7 | 0.7 | - | - | - | - |
| Amide wax | 0.3 | 0.4 | 0.3 | 0.3 | 0.3 | 0.3 | 0.3 | 0.3 | 0.3 | 0.3 | 0.3 |
| Crystalline aluminosilicate | 0.4 | 0.5 | 0.4 | 0.4 | 0.4 | 0.4 | 0.4 | 0.4 | 0.4 | 0.4 | 0.4 |
| Hollow ceramic spheres | - | - | - | - | - | - | - | - | 5.6 | - | - |

**Table 2 - Key ingredients of the compositions of the examples and comparative examples**

| | CE1 | CE 2 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| **Composition of coating composition per se (wt%)** | | | | | | | | | | | |
| Bisphenol A epoxy | 10.9 | 15.3 | 11.5 | 11.5 | 11.5 | 10.9 | 10.9 | 11.3 | 14.3 | 12.2 | 11.5 |
| Glass flake | - | - | 27.9 | 27.9 | 27.9 | 20 | 20.0 | 15.9 | 21.5 | 28.6 | 26.6 |
| Glass/ceramic bubbles | - | 5.1 | - | - | - | - | - | - | 5.6 | - | - |
| Zinc flake, 18-22 □m | - | 17.5 | 13.3 | 13.3 | - | 10.1 | 10.1 | 18.8 | 14.6 | 10.4 | 13.3 |
| Zinc flake, 12-15 □m | - | - | - | - | 13.3 | - | - | - | - | - | - |
| Zinc dust | 36.2 | 9.6 | 7.3 | 7.3 | 7.3 | 26.5 | 26.5 | 18.8 | 9.1 | 10.4 | 7.3 |
| Carbon nanotubes | - | 0.13 | 0.10 | - | 0.10 | - | - | - | 0.09 | 0.10 | 0.1 |
| Carbon fiber | - | - | - | - | - | 1.0 | 1.0 | 1.0 | - | - | - |

| **Composition of dry coating (wt%)** | | | | | | | | | | | |
|---|---|---|---|---|---|---|---|---|---|---|---|
| Bisphenol A epoxy | 14.6 | 23.5 | 15.8 | 15.8 | 15.8 | 13.8 | 14.8 | 15.2 | 19.7 | 16.6 | 15.8 |
| Glass flake | - | - | 38 | 38 | 38 | 25.30 | 27.90 | 21.5 | 29.5 | 38.7 | 36.2 |
| Glass/Ceramic bubbles | - | 7.9 | - | - | - | - | - | - | 7.6 | - | - |
| Zinc | 48.7 | 41.8 | 28.2 | 28.2 | 28.2 | 46.3 | 49.4 | 50.8 | 32.5 | 28.0 | 28.2 |
| Zinc flake | - | 27 | 18.2 | 18.2 | 18.2 | 12.7 | 13.6 | 25.4 | 20 | 14 | 18.2 |
| Zinc dust | 48.7 | 14.8 | 10 | 10 | 10 | 33.6 | 35.8 | 25.4 | 12.5 | 14 | 10 |
| Carbon nanotubes | - | 0.2 | 0.13 | - | 0.13 | - | - | - | 0.13 | 0.14 | 0.13 |
| Carbon fiber | - | - | - | - | - | 1.3 | 1.4 | 1.4 | - | - | - |

**Table 3**

| | Zinc in dry coating [wt%] | Rust creep [mm] | Surface rust [Ri 0-5] |
|---|---|---|---|
| CE1 | 48.7 | 2.4 | Ri 3 |
| CE2 | 41.8 | 1.9 | Ri 4 |
| Example 1 | 28.2 | 1.7 | Ri 0 |
| Example 2 | 28.2 | 2.1 | Ri 0 |
| Example 3 | 28.2 | 1.8 | Ri 0 |
| Example 4 | 46.3 | 0.5 | Ri 0 |
| Example 5 | 49.4 | 1.3 | Ri 0 |
| Example 6 | 50.8 | 0.8 | Ri 0 |
| Example 7 | 32.5 | 1.9 | Ri 0 |
| Example 8 | 28.0 | 1.6 | Ri 0 |
| Example 9 | 28.2 | 1.9 | Ri 0 |

The results show that coating compositions according to the invention provide improved corrosion resistance compared to standard Zn-dust containing compositions (CE1). It is also shown that it is possible to reduce the total amount of zinc in the coating compositions while still maintaining corrosion resistance. More specifically, CE1, which contains 48.7 %wt Zn dust in the dry coating, can be compared to example 2, which contains 28.2 wt% Zn in the dry coating, with 18.2 wt% as zinc flakes and 10.0 wt% as zinc dust. Despite the fact that example 2 contains almost half as much total Zn, it produces a better rust creep performance (2.1 vs. 2.4 mm) and has a lower degree of surface rust (Ri 0 vs. Ri 3). When CE1 is compared to a coating of the invention comprising a more similar amount of Zn (i.e. examples 4, 5 or 6 with 46-50 wt% Zn in the dry coating, mainly as Zn flake) the performance of the coating of the invention is significantly better (rust creep 0.5-1.3 vs. 2.4 mm) and no surface rust (Ri 0) vs. some surface rust (Ri 3).

A comparison of CE2, which contains 33 vol% (equivalent to 7.9 wt%) glass bubbles in the dry coating, with example 1, which contains an equivalent vol% of glass in the dry coating in the form of flakes (38 wt%) shows that the compositions of the invention provide better corrosion resistance. In particular example 1, with only 28.2 wt% zinc in the dry film achieves a rust creep of 1.7 mm, whereas a significantly higher wt% of zinc in dry film (42 wt%) in CE2 is needed to achieve a rust creep of 1.9 mm. CE2 also performed poorly in the surface rust test (Ri 4) with significant rust appearing whereas example 1 showed no rust (Ri 0). As CE2 has a much higher total zinc content than that of example 1, it would be expected that this coating should perform much better than example 1. This illustrates the superior barrier effect of the glass flakes compared to the glass bubbles.

A comparison of examples 1 and 3, which are identical except for the size of the zinc flakes shows that a similar, high-level of corrosion resistance is achieved in both cases.

A comparison of examples 1 and 2, which are similar except that carbon nanotubes are added to example 1, shows that the presence of a conductive pigment such as the nanotubes improves the corrosion resistance of the coating.

Examples 4-6 exemplify coating compositions of the present invention comprising higher amounts of zinc in the dry coating (circa 50 wt%) as well as carbon nanotubes. All of these compositions provide anti-corrosive coatings.

Examples 7-9 illustrate different coating compositions of the present invention comprising low, total, amounts of Zn, mainly in the form of Zn flakes, glass flakes and carbon fiber as the conductive pigment. Despite the fact that the coatings comprise <30 wt% total Zn, the coatings are corrosion resistant.

In further testing, the rust creep of CE1 and example 1 was tested in a mid-coat system. Zinc-rich anti-corrosive coatings are sometimes used as part of a coating system. The zinc-rich coating is applied directly to the metal and then another coating, often an epoxy coating, is applied thereto. The coatings of example 1 and CE1 were tested in such a system. An epoxy coating (Jotacoat Jotacote Universal N10 Buff, a two component polyamine cured pure epoxy coating) was applied on top of coatings prepared using the compositions of example 1 and CE1 as described above. The dry film thickness of the system was circa 280 µm. The system was cured at 23 °C and 50% relative humidity for 7 days before exposure to salt spray. The salt spray test, as described above, was then used to test the corrosion resistance of the coating systems.

The results are shown in Table 4.

| System | Zinc in dry film [wt%] | Rust creep system [mm] |
|---|---|---|
| CE1 + mid coat | 50 | 1.6 |
| Ex 1 + mid coat | 28 | 1.7 |

The results in Table 4 show that a coating system comprising a coating composition of the present invention comprising 28 wt% zinc gives as good corrosion protection as a standard coating comprising 50 wt% zinc.

Other benefits of using glass flakes compared to e.g. micro-talc, are lower volatile organic compounds (VOC) content and higher volume solids (VS). This is due to the lower specific gravity of glass flakes and lower oil absorption. Lower oil absorption means that a higher wt% of glass flakes can be used in the formulation compared to micro-talc when using the same amount of solvents. Lower specific gravity means that for the same weight, glass flakes will take up a larger volume than micro-talc.

## Claims

1. A coating composition comprising:
(i) a binder;
(ii) glass flakes;
(iii) zinc flakes; and
(iv) optionally zinc dust.

2. A composition as claimed in claim 1, wherein said binder is selected from epoxy-based, polyurethane-based, polyurea-based, polysiloxane-based, silicate-based, phenolic-based, acrylic-based, and hybrids and mixtures thereof, preferably epoxy-based.

3. A composition as claimed in claim 1 or 2, wherein said composition comprises 1-70 wt% binder, based on the total weight of the composition.

4. A composition as claimed in any preceding claim, wherein the zinc flakes have an aspect ratio of 5:1 to 40:1 and/or a thickness of 0.5 to 5 µm.

5. A composition as claimed in any preceding claim, wherein the amount of said zinc flakes is 1-40 wt%, based on the total weight of the compositions.

6. A composition as claimed in any preceding claim, further comprising zinc dust, preferably wherein the amount of said zinc dust is 0-80 wt%, based on the total weight of the compositions.

7. A composition as claimed in any preceding claim, wherein the total amount of zinc is 20-80 wt%, based on the total weight of the compositions.

8. A composition as claimed in any preceding claim, wherein said glass flakes have a thickness of 0.1 to 15 µm and/or a particle size D₈₈, of 1 to 100 microns.

9. A composition as claimed in any preceding claim, wherein the amount of said glass flakes is 1-45 wt%, based on the total weight of the compositions.

10. A composition as claimed in any preceding claim, further comprising a conductive pigment, preferably a conductive pigment is selected from carbon nanotubes, carbon fibres or a mixture thereof.

11. A method for preparing a composition as claimed in any preceding claim, comprising mixing:
(i) a binder;
(ii) glass flakes;
(iii) zinc flakes; and
(iv) optionally zinc dust.

12. A kit for preparing a composition as claimed in any one of claims 1 to 10, comprising:
(i) a first container containing a binder, and optionally glass flakes, zinc flakes, and zinc dust;
(ii) a second container containing curing agent and/or zinc flakes and/or zinc dust, and optionally glass flakes;
wherein each of glass flakes and zinc flakes are present in at least one of said containers.

13. A container containing a composition as claimed in any one of claims 1 to 10.

14. A method of providing a coating on a surface, preferably a metal surface, wherein said method comprises:
(i) applying a composition as claimed in any one of claims 1 to 10; and
(ii) curing said composition to form a coating on the surface.

15. A coating on a surface, preferably a metal surface, wherein said coating comprises a composition as claimed in any one of claims 1 to 10.

16. Use of a composition as claimed in any one of claims 1 to 10 to form a coating, preferably an anti-corrosion coating, on at least one surface of an article.
